# EUROPEAN PATENT SPECIFICATION

(11) **EP 2 478 777 B1**
(45) Date of publication and mention of the grant of the patent: **09.07.2014**
(21) Application number: 12157450.3
(22) Date of filing: 21.12.2006
(51) Int. Cl.: A23L 1/226, A23L 1/222, A23G 3/36, A23G 4/06

(54) **Composition providing a cooling sensation substantially similar to that provided by menthol**
Zusammensetzung mit ähnlichem Kühlungsempfinden wie bei Menthol
Composition fournissant une sensation de refroidissement sensiblement similaire à celle fournie par le menthol

(30) Priority: 23.12.2005 US 753524 P
(43) Date of publication of application: 25.07.2012
(62) Divisional of application: 06846008.8
(73) Proprietor: Intercontinental Great Brands LLC, East Hanover, NJ 07936 (US)
(72) Inventor: Harvey, Joan. E, PA19543, NJ New Jersey PA19543 (US); Shah, Shanaz, NJ 11385, NJ New Jersey NJ 11385 (US); Hussein, Mamoun, NJ 07005, NJ New Jersey NJ07005 (US)
(74) Representative: Wilson Gunn

(56) References cited:
- WO-A-94/21135
- US-A1- 2004 141 927
- ECCLES R: "REVIW: MENTHOL AND RELATED COOLING COMPOUNDS", JOURNAL OF PHARMACY AND PHARMACOLOGY, LONDON, GB, vol. 46, 1994, pages 618-630, XP009076858, ISSN: 0022-3573

## Description

### FIELD

The present invention relates to a composition and products for oral or skin delivery such as chewing gums and confectioneries. The composition and products contain agents including agents that in combination provide substantially the same physiological sensation as that provided by menthol alone.

### BACKGROUND

Many substances are known to provide a sensation of cooling on application and are called "cooling agents." Exemplary cooling agents include menthol, isopulegol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, menthone, menthone glycerol ketal, menthyl lactate, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, and menthyl pyrrolidone carboxylate.

Menthol is known for its physiological cooling effect on the skin and mucous membranes of the mouth and has been extensively used as a flavouring agent, being a major constituent of oil of peppermint in foodstuffs, beverages, dentrifrices, mouthwashes, etc. and as a component in a wide range of toiletries, liniments and lotions for topical application. Menthol is also a well known tobacco additive for producing a "cool" sensation in the mouth when smoking. Carvomenthol has also been reported as having a physiological cooling effect as have N,N-dimethyl-2-ethyl butanamide and N,N-diethyl-2-ethyl butanamide as described in, for instance, French Patent No. 1,572,332.

It is well established that the "cooling" effect of menthol is a physiological effect due to the direct action of menthol on the nerve endings of the human body responsible for the detection of hot and cold. Menthol directly stimulates cold preceptors. Some non-menthol compounds providing a physiological effect similar to menthol are described in U.S. Patent No. 4,296,255, incorporated herein by reference.

Menthol has been used in conjunction with other cooling agents because, among other things, it acts to prepare taste buds to receive non-menthol cooling agents. Menthol provides a light, fresh, minty sensation and in some regards prepares taste buds to receive a cooling sensation. It has been reported that some cooling agents, e.g. WS-3 and WS-23, may in fact deliver an initial warming sensation if supplied without menthol.

Peppermint oil is currently used to create a "cooling" in oral products such as toothpaste, mouthwash, chewing gum, candy and other food products. Peppermint oil generally comprises about 45-55% menthol, about 20-25% menthone, about 5% menthyl acetate, about 5% eucalyptol and many other constituents. Peppermint oil is even used in non-peppermint products, such as spearmint or wintergreen flavored products, in order to create this desired cooling effect. However, peppermint notes are then found in the resulting non-peppermint flavored products.

Being a major constituent of peppermint oil, menthol has been used extensively in foods, beverages, dentrifices, mouthwashes, toiletries, lotions and the like. Moreover, most confectionery products which are promoted for breath freshening are mint flavored products which contain moderate to high levels of menthol. The disadvantages of using menthol, however, are its strong minty odor and the harsh notes it imparts to compositions in which it is found. A need, therefore, exists for a cooling flavor composition that will contribute a long-lasting cooling sensation to products in which it is found without the unwanted harshness or flavor characteristics that come from adding menthol.

In some consumer products, especially chewing gums, it is desirable to provide a burst of intense flavor over a slow, gentle flavor release. In order to provide a favorable flavor impact, some chewing gum manufacturers have added flavors to the coating of a coated chewing gum. These flavors include spearmint flavor, peppermint flavor, wintergreen flavor and fruit flavors. In addition, very strong flavors such as menthol have often been used to provide a burst of flavor. However, at concentrations effective to provide a burst of flavor, menthol or mint flavors also manifest a bitter, harsh, burning taste sometimes described as a "harsh note".

Efforts have been directed at perfecting the use of physiological cooling agents within chewing gum formulations to enhance flavor composition and control their release to enhance the flavor of chewing gum. U.S. Patent No. 5,326,574 discloses a process for codrying the physiological cooling agent 3-1-menthoxypropane-1,2-diol with a food acceptable, water soluble carrier and mixing the resulting product into chewing gum.

A need, therefore, exists for a cooling flavor composition that will contribute a cooling sensation to products in which it is found without the unwanted harshness or flavor characteristics that come from adding menthol. It would also be desirable to provide a clean, high-quality flavor chewing gum with a good cooling effect. Some compositions have been proposed, such as in U.S. Patent Application Publication No. 2005/0019445, in order to reduce the amount of menthol required to impart a fresh taste. For example, for menthol flavored chewing gum, a combination of physiological cooling agents has been proposed allowing for a reduced overall concentration of menthol. However, these compositions do not completely eliminate menthol.

### SUMMARY

The compounds and compositions described herein provide one or more of four physiological sensations characteristic of menthol. As such, discovery of the particular physiological sensations imparted by the individual compounds allows for compositions that impart a physiological sensation substantially the same as that imparted by menthol. However, the menthol may be completely absent from such formulations or be present in amounts substantially less than would otherwise be required to impart the same physiological sensation. Moreover, the particular compounds described herein may be present in such compositions in varied amounts so as to vary the intensity of the particular physiological sensation that is characteristic of menthol. The physiological sensations that are characteristic of menthol include "aroma," "nasal action," "cooling effect," and "minty taste."

The invention provides a cooling composition providing substantially the same physiological sensation as a composition that includes menthol, the cooling composition including:
menthone in an amount of about 10 to about 25 wt %;
isomenthone in an amount of about 10 to about 25 wt %;
isopulegol in an amount of about 2.5 to about 15 wt %;
monomenthyl succinate in an amount of about 15 to about 25 wt %; and menthyl lactate in an amount of about 5 to about 30 wt %.

The cooling composition may also comprise:
eucalyptol in an amount of about 1.0 to about 2.0 wt %; and/or
camphor in an amount of about 1.0 to about 2.0 wt %.

### DETAILED DESCRIPTION

### Definitions

As used herein the transitional term "comprising," (also "comprises," etc.) which is synonymous with "including," "containing," or "characterized by," is inclusive or open-ended and does not exclude additional unrecited elements or method steps regardless of its use in the preamble or the body of the claim.

As used herein "cooling agent" is any agent whether described herein, known in the art as producing, or otherwise capable of producing a sensation described as cooling by those experiencing it on the skin, oral cavity or mucous membranes.

As used herein "nasal action" is a cooling or freshening physiological sensation perceived in the nasal cavity.

As used herein "aroma" is a minty or freshening physiological sensation perceived as a sense of smell.

As used herein "cooling effect" is a sensation described as cooling by those experiencing it on the skin, oral cavity or mucous membranes.

As used herein "minty taste" is a physiological sensation perceived in the oral cavity that is similar to that perceived when mint is encountered.

As used herein "physiological sensation substantially similar to menthol" is a sensation that is perceived and described as one or more of a nasal action, aroma, cooling effect or minty taste similar to one or more of the foregoing perceived when menthol is encountered. Such term may be quantified with, for instance, whereby subj ects are asked to compare the relative intensity of a physiological sensation experienced with a cooling agent or cooling composition as compared to that experienced from menthol alone or a composition comprising menthol. Generally, a compound or composition is said to have a "physiological sensation substantially similar to menthol" when evaluated by a panel of respondents. For instance, respondents may be asked to evaluate the similarity to menthol or the similarity of a physiological sensation to that same physiological sensation imparted by menthol based on a score of 1 to 10 with 1 being "dissimilar to menthol" and 10 being "substantially identical to menthol," or on a score of 1 to 100 with 1 being "dissimilar to menthol" and 100 being "substantially identical to menthol." A perceived physiological sensation is said to be "substantially similar to menthol" if respondents on average rate the similarity as 5 or greater on a scale of 1 to 10 or 50 or greater on a scale of 1 to 100, preferably 6 and 60 greater, respectively, and even more preferably 7 and 70 greater, respectively. In the most preferred instances, the score may be 9 and 90 or greater, respectively.

Cooling flavor compositions that provide the desired cooling sensation but not the unwanted harshness and flavor characteristics of menthol are provided. The cooling flavor compositions replace some or all of the peppermint oil and menthol presently used to create a cooling. Because the cooling flavor compositions use compounds that impart substantially the same physiological sensation as menthol, as opposed to peppermint oil, the cooling flavor compositions do not add unwanted peppermint notes.

The compositions take advantage of the characteristic "nasal action," "aroma," "cooling effect," and "minty taste," imparted by naturally occurring menthol as present in, for example, peppermint oil. Various compounds may be used in combination in varying amounts to achieve such a result so long as the physiological effect imparted is substantially the same as naturally occurring menthol. In some embodiments, the "nasal' action" is provided by one or more of menthone, isomenthone, camphor and eucalyptol. In some embodiments, the "aroma" is provided by one or more of eucalyptol, camphor, menthone and isomenthone. In some embodiments, the "cooling effect" is provided by one or more of isopulegol, monomenthyl succinate, and menthyl lactate. In some embodiments, the "minty taste" is provided by one or more of menthone, isomenthone, eucalyptus, ducalyptol, ethyl benzoate, neomenthol, d-fenchone, furfurylidene butyrate, bucchu fractions, sage oil, corn mint oil, rosemary, monomenthyl succinate, amyl salicylate, eugenol, phellendrene, propyl furoate, ethyl-3-hydroxy butyrate, hexyl valerate, anisyl propionate, anysyl butyrate, dihydrocarveol, and clary sage.

The individual compounds may be present in varying amount by weight percent. In some embodiments, menthone and isomenthone may each be present in about 15 to about 25 wt. %. In some embodiments, methyl lactate is provided in an amount of about 15 to about 30 wt. %. In some embodiments, viridifloral or another suitable fixative is present in an amount of about 1 to about 10 wt. % and preferably about 3 to about 6 wt. %. In other embodiments, isopulegol may be present in an amount of about 3 to about 6 wt. %.

The compositions may include one or more cooling agents in addition to those that are chosen to impart a substantial menthol sensation. The cooling agents may be any compound or composition known as a cooling agent. Typical examples of the cooling agents which can be used include:
(1) a compound represented by formula (I): 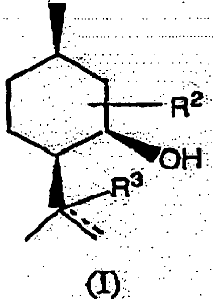 wherein R² and R³ each represent a hydrogen atom or a hydroxyl group, represents a single bond or a double bond, the same definition applies hereinafter,
(2) a compound represented by formula (II): 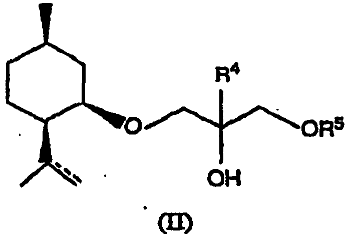 wherein R⁴ represents a hydrogen atom or a methyl group; R⁵ represents a hydrogen atom, a lower alkyl group or a 2-alkoxyethyl group,
(3) a compound represented by formula (III): 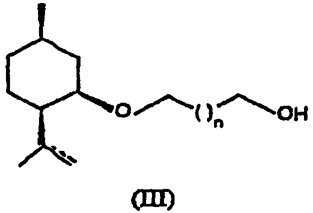 wherein n represents an integer of 1 to 10,
(4) a compound represented by formula (IV): 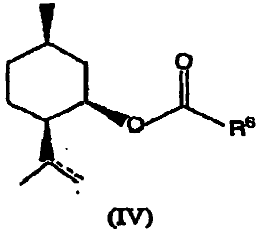 wherein R⁶ represents a hydrogen atom, a straight-chain or branched alkyl or alkenyl group, or a straight-chain or branched hydroxyalkyl group,
(5) a compound represented by formula (V): 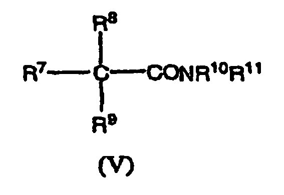 wherein R¹⁰ and R¹¹, when taken together, represent an alkylene group of up to 6 carbon atoms, the opposite ends of which group are attached to the amide nitrogen atom thereby to form a nitrogen heterocycle, the carbon atom chain of which may optionally be interrupted by oxygen;
   R⁷ is hydrogen or C1 -C5 alkyl; and
   R⁸ and R⁹ are each C1 -C5 alkyl;
   with the provisos that
   (i) R⁷, R⁸ and R⁹ together provide a total of at least 5 carbon atoms, preferably from 5-10 carbon atoms; and
   (ii) when R⁷ is hydrogen, R⁸ is C2 -C5 alkyl and R⁹ is C3 -C5 alkyl and at least one of R⁷ and R⁸ is branched, preferably in an alpha or beta position relative to the carbon atom in the formula.

Where the compounds have an asymmetric carbon atom, either optical isomer may be used in pure form but generally a mixture of optical isomers will be used. In some cases, the degree of cooling produced by the compounds on the skin will differ as between optical isomer, in which case one or other isomer may be preferred.

The preferred amides of formula V are the tertiary compounds, i.e. those where each of R⁷, R⁸ and R⁹ is C1-C5 alkyl, especially those where R⁷ is methyl, ethyl or n-propyl and at least one of R⁸ and R⁹ is a branched chain group having branching in an alpha or beta position relative to the C atom. Also preferred are mono-substituted amides, i.e. where R¹⁰ is H, and disubstituted amides where R¹⁰ and R¹¹ are methyl or ethyl. A further preferred group consists of amides of the formula given where R⁷ is hydrogen and at least one of R⁸ and R⁹ is branched in an alpha position relative to the carbon atom.
R⁷ and R⁸ are each C1 -C5 alkyl;
(6) 1-menthylacetic acid N-ethylamide, and (6) N,2,3-trimethyl-2-(1-methylethyl)-butanamide.

Specific examples of the cooling agents which are preferably used include, but are not limited to, menthol, isopulegol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, menthone, menthone glycerol ketal, menthyl lactate, 3-(1-menthoxy)ethan-1-ol, 3-(1-menthoxy)propa-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, WS-3, WS-12, WS-14, WS-23 and spearmint oil.

Preferred cooling agents may include, for example, 3-(1-menthoxy)propane-1,2-diol, 3-(1-menthoxy)-2-methylpropane-1,2-diol, p-menthane-3,8-diol, 3-(1-menthoxy)ethan-1-ol, 3-(1-menthoxy)propan-1-ol, and 3-(1-menthoxy)butan-1-ol. Still preferred are 3-(1-menthoxy)propane-1,2-diol and 3-(1-menthoxy)-2-methylpropane-1,2-diol, WS-3, WS-12, WS-14, and WS-23.

In some embodiments, a cooling composition providing a physiological sensation substantially the same as one or more of the physiological sensations characteristic of a composition including menthol is provided. However, the compositions are substantially free of menthol or provide menthol in an amount substantially less than that required by other compositions to provide the same physiological effect. Moreover, the compositions include at least one compound that imparts a characteristic "nasal action," "aroma," "cooling effect," and "minty taste," imparted by naturally occurring menthol as present in, for example, peppermint oil. Various compounds may be used in combination in varying amounts to achieve such a result so long as the physiological effect is one or more of the aforementioned characteristics of naturally occurring menthol.

In some embodiments, the "nasal action" is provided by one or more of menthone, isomenthone, camphor and eucalyptol. In some embodiments, the "aroma" is provided by one or more of eucalyptol, camphor, borneol, fenchone, menthone and isomenthone. In some embodiments, the "cooling effect" is provided by one or more of isopulegol, monomenthyl succinate, and menthyl lactate. In some embodiments, the "minty taste" is provided by one or more of borneol, fenchone, menthone, isomenthone, eucalyptus, ducalyptol, ethyl benzoate, neomenthol, d-fenchone, furfurylidene butyrate, bucchu fractions, sage oil, corn mint oil, rosemary, monomenthyl succinate, amyl salicylate, eugenol, phellendrene, propyl furoate, ethyl-3 -hydroxy butyrate, hexyl valerate, anisyl propionate, anysyl butyrate, dihydrocarveol, and clary sage. The compounds that impart each of the characteristics of menthol may be present in increased or decreased amounts according to the desired intensity of the characteristic imparted thereby.

The individual compounds may be present in varying amounts by weight percent. In some embodiments, menthone and isomenthone are each present in about 15 to about 25 wt. %. In some embodiments methyl lactate is provided in an amount of about 15 to about 30 wt. %. In some embodiments, viridifloral or another suitable fixative is present in an amount of about 1 to about 10 wt. % and preferably about 3 to about 6 wt. %. Other suitable fixatives include but are not limited to piperitone, bisazolene, seran mentone, lactone and gasmone. In other embodiments, isopulegol is present in an amount of about 3 to about 6 wt. %.

The cooling composition, which may be included in a chewing gum or confectionary composition, includes: menthone in an amount of about 10 to about 25 wt%; isomenthone in an amount of about 10 to about 25 wt%; isopulegol in an amount of about 2.5 to about 15 wt%; monomenthyl succinate in an amount of about 15 to about 25 wt%; and menthyl lactate in an amount of about 5 to about 30 wt%.

In some preferred embodiments, the cooling composition may further include eucalyptol in an amount of about 1.0 to 2.0 wt %. In some preferred embodiments, the cooling composition may further include camphor in an amount of about 1.0 to about 2.0 wt %.

In some preferred embodiments, the cooling composition may further include viridiflorol in an amount of about 2.0 to about 10 wt %. Moreover, in some preferred embodiments, the cooling composition may further include WS-14 in an amount of about 5 to about 25 wt %.

In some preferred embodiments, the cooling composition, which may be included in a chewing gum or confectionary composition, includes:
menthone in an amount of about 10 to about 25 wt%;
isomenthone in an amount of about 10 to about 25 wt%;
isopulegol in an amount of about 2.5 to about 15 wt%;
monomenthyl succinate in an amount of about 15 to about 25 wt%;
menthyl lactate in an amount of about 5 to about 30 wt%;
eucalyptol in an amount of about 1.0 to about 2.0 wt%; and
camphor in an amount of about 1.0 to about 2.0 wt%.

In some preferred embodiments, the cooling composition may further include viridifloral in an amount of about 2.0 to about 10 wt %.

When a greater physiological sensation of the "nasal action" characteristic of menthol is desired, one or more of menthone, isomenthone, camphor and eucalyptol is present in a greater amount. When a greater physiological sensation of the "aroma" characteristic of menthol is desired, one or more of eucalyptol, camphor, borneol, fenchone, menthone and isomenthone is present in a greater amount. When a greater physiological sensation of the "cooling effect" characteristic of menthol is desired, one or more of isopulegol, monomenthyl succinate, and menthyl lactate is present in a greater amount. When a greater physiological sensation of the "minty taste" characteristic of menthol is desired, one or more of menthone, isomenthone, borneol, fenchone, eucalyptus, ducalyptol, ethyl benzoate, neomenthol, d-fenchone, furfurylidene butyrate, bucchu fractions, sage oil, corn mint oil, rosemary, monomenthyl succinate, amyl salicylate, eugenol, phellendrene, propyl furoate, ethyl-3-hydroxy butyrate, hexyl valerate, anisyl propionate, anysyl butyrate, dihydrocarveol, and clary sage is present in a greater amount.

Using menthol in combination with one or more physiological cooling agents provides optimal cooling without unwanted flavor characteristics. Adding the physiological cooling agent provides an unexpected, high-flavor impact where the harsh notes have been reduced or eliminated. Moreover, varying the amounts of the physiological cooling agents that impart one of the physiological sensations characteristic of menthol, allows the amount of that characteristic physiological sensation to be controlled.

In some embodiments, a chewing gum or confection including a cooling composition comprising a cooling agent and providing substantially the same physiological sensation as a composition comprising menthol is provided. However, the chewing gums and confections are substantially free of menthol or provide menthol in an amount substantially less than that required by other compositions to provide the same physiological effect.

The chewing gums and confections take advantage of the characteristic "nasal action," "aroma," "cooling effect," and "mint taste," imparted by naturally occurring menthol as present in, for example, peppermint oil. Various compounds may be used in combination in varying amounts to achieve such a result so long as the physiological effect imparted is substantially the same as naturally occurring menthol. In some embodiments of the chewing gum or confection, the "nasal action" is provided by one or more of menthone, isomenthone, camphor and eucalyptol. In some embodiments of the chewing gum or confection, the "aroma" is provided by one or more of eucalyptol, camphor, menthone and isomenthone. In some embodiments of the chewing gum or confection, the "cooling effect" is provided by one or more of isopulegol, monomenthyl succinate, and menthyl lactate. In some embodiments of the chewing gum or confection, the "minty taste" is provided by one or more of menthone and isomenthone. The compounds that impart each of the characteristics of menthol may be present in increased or decreased amounts according to the desired intensity of the characteristic imparted thereby.

When a greater physiological sensation of the "nasal action" characteristic of menthol is desired, one or more of menthone, isomenthone, camphor and eucalyptol is present in a greater amount in the chewing gum or confection. When a greater physiological sensation of the "aroma" characteristic of menthol is desired, one or more of eucalyptol, camphor, borneol, fenchone, menthone and isomenthone is present in a greater amount in chewing gum or confection. When a greater physiological sensation of the "cooling effect" characteristic of menthol is desired, one or more of isopulegol, monomenthyl succinate, and menthyl lactate is present in a greater amount in the chewing gum or confection. When a greater physiological sensation of the "minty taste" characteristic of menthol is desired, one or more of menthone, isomenthone, borneol, fenchone, eucalyptus, ducalyptol, ethyl benzoate, neomenthol, d-fenchone, furfurylidene butyrate, bucchu fractions, sage oil, corn mint oil, rosemary, monomenthyl succinate, amyl salicylate, eugenol, phellendrene, propyl furoate, ethyl-3-hydroxy butyrate, hexyl valerate, anisyl propionate, anysyl butyrate, dihydrocarveol, and clary sage is present in a greater amount in the chewing gum or confection.

The present invention further provides a method for delivering a physiological sensation substantially the same as that provided by menthol to the skin or a mucous membrane, such as the mouth and throat. The method includes administering a cooling composition providing substantially the same physiological sensation as a composition including menthol, wherein the cooling composition is substantially free of menthol. The amount administered may vary dependent upon the desired intensity of physiological sensation and dependent upon the nature of the product containing the compositions. In some embodiments, the administered cooling composition is in a chewing gum or confection.

As described above, the present invention provides a cooling composition providing substantially the same physiological sensation as a composition comprising menthol. However, the compositions are substantially free of menthol or provide menthol in an amount substantially less than that required by other compositions to provide the same physiological effect.

The present invention also provides novel cooling flavor compositions including menthol or that impart one or more physiological sensations characteristic of menthol. Menthol, which occurs naturally in peppermint oil, is the agent that provides the "cooling" sensation, but menthol alone tends to distort flavor notes. The compositions described herein allow the amount of menthol to be reduced or may allow menthol to be eliminated entirely. Moreover, the amounts of the compounds that in combination impart a physiological sensation substantially the same as menthol may be added in varied amounts so as to impart one or more of the particular physiological sensations characteristic of menthol.

It has been found that the characteristic "nasal action" of menthol may be achieved when an amount of menthol is present in a composition equal to or greater than about 3 parts per million (ppm), preferably equal to or greater than about 5 or even 10 ppm. For purposes of achieving the characteristic "nasal action" of menthol, an equivalent amount of another compound sufficient to impart the characteristic "nasal action" of menthol is about 0.5 ppm, preferably about 1 ppm or even 2 or 3 ppm of methone, about 0.5 ppm, preferably about 1 ppm or even 2 or 3 ppm of isomethone, about 0.1 ppm, preferably about 0.2 ppm or even 0.3 or 0.5 ppm of eucalyptol, and about 10 ppm, preferably about 20 ppm or even 30 or 50 ppm of camphor. Using these relative conversions, one of ordinary skill in the art may readily substitute one or more compounds to achieve the relative "nasal action" of menthol.

It has been found that the characteristic "cooling effect" of menthol may be achieved when an amount of menthol is present in a composition equal to or greater than about 25 parts per million (ppm), preferably equal to or greater than about 50 or even 100 ppm. For purposes of achieving the characteristic "cooling effect" of menthol, an equivalent amount of another compound sufficient to impart the characteristic "cooling effect" of menthol is about 50 ppm, preferably about 100 ppm or even 200 or 300 ppm of menthyl lactate, about 20 ppm, preferably about 40 ppm or even 50 or 75 ppm of monomenthyl succinate, and about 0.01 ppm, preferably about 0.1 ppm or even 0.3 or 0.5 ppm of isopulegol. Using these relative conversions, one of ordinary skill in the art may readily substitute one or more compounds to achieve the relative "cooling effect" of menthol.

Some compositions that provide an especially similar physiological sensation as that provided by menthol feature menthone in an amount of about 10 to about 22 wt. %, isomenthone in an amount of about 10 to about 22 wt. %, isopulegol in an amount of about 6 to about 14 wt. %, monomenthyl succinate in an amount of about 18 to about 22 wt. %, menthyl lactate in an amount of about 9 to about 25 wt. %, WS-14 in an amount of about 9 to about 19 wt. %, and viridifloral in an amount of about 2 to about 6 wt. %. Optionally, WS-3 may be present in an amount of about 10 to about 22 wt. %, a menthyl glutarate ester may be present in an amount of about 12 to about 14 wt. %, eucalyptol may be present in an amount of about 1 to about 2 wt. %, camphor may be present in an amount of about 1 to about 2 wt. %, and menthol may be present in an amount of about 4 to about 5 wt. %.

The present invention extends to products that otherwise may contain menthol such as preferably flavoring agents, foodstuffs, confections, beverages, chewing gums, dentrifices, mouthwashes, toiletries, liniments lotions for topical application and cigarettes, such products including a composition that provides a physiological sensation substantially the same as that provided by menthol. The compositions providing a substantially identical physiological sensation to that provided by menthol may further be used in combination with other flavoring agents.

### Cooling agents

Physiological cooling agents encompasses any number of physiological cooling agents. However, in the context of this description, the term "physiological cooling agent" does not include traditional flavor-derivatives such as menthol or menthone. Preferred physiological cooling agents do not have a perceptible flavor of their own, but simply provide a cooling effect.

An optional additional component of the cooling compositions is a physiological cooling agent. Suitable levels of the cooling agent are from about 0.001 to about 70%, preferably from about 0.01 to about 50%, more preferably from about 0.05 to about 15% by weight of the composition, and still more preferably from about 0.10 to about 5% by weight of the composition.

Generally, the cooling compositions will contain an amount of the active cooling agents sufficient to stimulate the cold receptors in the areas of the skin or mucous membrane with which the compositions come into contact and thereby promote the desired cold sensation. As the degree and longevity of cooling sensation varies from compound to compound, the quantity of stimulant used in each composition will vary widely. As a guide, it may be said that, with the more active compounds, a significant cooling sensation, which, in some cases, may persist for several hours, is achieved upon application to the mucosa or skin of as little as 0.05 ml. of a 1.0% weight percent solution of the active ingredient in ethanol. For the less active compounds, a significant cooling effect is achieved only with more concentrated solutions, e.g. 5.0% by weight or more of the active ingredient. It must also be admitted that such skin tests are somewhat subjective, some individuals experiencing a greater or lesser cooling sensation than others when subjected to the same test.

Cooling agents are well known in the art and are described in, for instance, U.S. Patent Nos: 4,032,661, 4,070,449, 4,033,994, 4,296,093, 4,295,255, 4,230,688,4,034,109, 4,020,153, 4,136,163, 5,266,592, U.S. Publication Nos. 2004/0067970 and 2005/0019455, and a publication by John C. Leffingwell available at http://www.leffingwell.com, entitled "Cool without Menthol & Cooler than Menthol and Cooling Compounds as Insect Repellents," the disclosures of which are herein incorporated by reference. A test for physiological cooling agents is described in GB-A-1,452,291, published Oct. 13, 1976, reproduced in part herein below for convenience. Preferred physiological cooling agents do not have a perceptible flavor of their own, but simply provide a cooling effect. Since the physiological cooling agents do not have their own perceptible flavor, they can be used with other types of flavors to offer new and unique advantages, such as breath freshening. Several U.S. and foreign references disclose specific compounds and classes of compounds that are physiological cooling agents that may be used in the present compositions. Some of these disclose the use of physiological cooling agents in chewing gum. These include, for instance, U.S. Patent No. 5,451.,404 (a ketal combined with another coolant (menthol or carboxamides)); U.S. Patent No. 5,372,824 (physiological cooling agents and reduced menthol); U.S. Patent No 5,348,750 (menthone ketals); U.S. Patent No. 5,326,574 (a spray dried 3-1-menthoxypropane-1,2-diol-); U.S. Patent No. 5,266,592 (menthane glycerol ketals); U.S. Patent No. 5,165,943 (a cyclodextrin complex with physiological cooling agents); U.S. Patent No. 5,009,893 (p-menthane carboxamide physiological cooling agent with menthol for reduced bittemess); U.S. Patent No. 4,459,425 (3-1-menthoxypropane-1,2-diol); U.S. Patent No. 4,296,093 (substituted cyclohexanamides); U.S. Patent Nos. 4,248,859 and 4,318,900 (alkyl substituted alicyclic carboxylic acids, esters or amides); U.S. Patent Nos. 4,157,384 and 4,029,759 (various 3-substituted p-menthanes); U.S. Patent No. 4,081,480 (alpha-oxy(oxo)mercaptan alkanes); U.S. Patent No. 4,070,449 (sulphoxides and sulphones); U.S. Patent Nos. 4,060,091; 4,190,643 and 4,136,163 (substituted p-menthane-3-carboxamides); U.S. Patent Nos. 4,153,679; 4,296,255 and 4,230,688 (acyclic carboxamides); U.S. Patent No. 4,034,109 (acyclic sulphonamides and sulphinamides); U.S. Patent No. 4,033,994 (p-menthane-3-carboxylates); U.S. Patent Nos. 3,793,446 and 3,644,613 (ketoesters of menthol); U.S. Patent No. 3,720,762 (spilanthol with menthol or peppermint oil); Canadian Patent No. 2,1.41,790 (carbonic acids having free polar groups); German Patent No. 2,608,226 (menthyl lactate); German Patent No. 2,433,165 (N-acetylglycine menthyl ester); French Patent No. 2,577,922 (L-menthyl-3-hydroxybutyrate); Japanese Patent No. 94/065023 (2-isopropenyl-5-methylcyclohexanol); Great Britain Patent No. 1,502,680 (bicyclic acids, esters, amides and substituted menthanols); Great Britain Patent No. 1,476,351 (cyclic and acyclic amides, ureas and sulphonamides); Great Britain Patent No. 1,442,998 (trialkyl-substituted cyclohexane carboxamides); Great Britain Patent Nos. 1.,421,744 and 1,421,743 (novel amides); Great Britain Patent No. 1,411,786 (cyclohexanamides); Great Britain Patent No. 1,404,596 (acyclic secondary and tertiary alkanols); PCT Publication No. WO 97/07771 (menthyl succinate and carboxamides); PCT Publication No. WO 96/28133 (coolant composition for comestibles); PCT Publication No. WO 96/17524 (a cooling composition comprising N-substituted p-menthane carboxamides and menthol); PCT Publication No. WO 94/010117 (cyclohexanol derivatives); and U.S. Patent No. 3,639,569 (physiological cooling agents). U.S. Patent Nos: 4,032,661, 4,070,449, 4,033,994, 4,296,093, 4,296,093, 4,296,255, 4,230,688, 4,034,109, 4,020,153, 5,266,592, U.S. Publication Nos. 2004/0067970 and 2005/0019455, and a publication by John C. Leffingwell, available at http:llwww.leffingwell.com, entitled "Cool without Menthol & Cooler than Menthol and Cooling Compounds as Insect Repellents," the disclosures of which are also herein incorporated by reference provide yet further examples. A test for physiological cooling agents is described in GB-A-1,452,291, published Oct. 13, 1976, reproduced in part herein below for convenience.

Particular examples of physiological cooling agents include, for instance, substituted p-menthanes, substituted p-menthane-carboxamides (e.g., N-ethyl-p-menthane-3-carboxamide (FEMA 3455)), acyclic carboxamides, substituted cyclohexanamides, substituted cyclohexane carboxamides, substituted ureas and sulphonamides, and substituted menthanols (all from Wilkinson Sword); hydroxymethyl and hydroxyethyl derivatives of p-menthane (from Lever Bros.); menthyl succinate and its alkaline earth metal salts; 2-mercapto-cyclo-decanone (from International Flavors and Fragrances); 2-isopropanyl-5-methylcyclohexanol (from Hisamitsu Pharmaceuticals, hereinafter "isopregol"); hydroxycarboxylic acids with 2-6 carbon atoms; menthone glycerol ketals (FEMA 3807, tradename FRESCOLAT.TM. type MGA); 3-1-menthoxypropane-1,2-diol (from Takasago, FEMA 3784, (hereinafter "TCA")); and menthyl lactate; (from Haarman & Reimer, FEMA 3748, tradename FRESCOLAT® type ML).

Further useful physiological cooling agents include xylitol, erythritol, dextrose, sorbitol, menthane, menthone, ketals, menthone ketals, mono menthyl glutarate, cyclohexanamides, menthyl acetate, menthyl salicylate, N,2,3-trimethyl-2-isopropyl butanamide (WS-23), N-ethyl-p-menthane-3-carboxamide (WS-3), isopulegol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, trimethylcyclohexanol, N-ethyl-2-isopropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, I-menthyl-3-hydroxybutyrate, N,2,3-trlmethyl-2-(1-methyletbyl)-butanamide, n-ethyl-t-2-c-6 nonadienamide, N,N-dimethyl menthyl succinamide, substituted p-menthanes, menthone glycerol ketals (FEMA 3807, tradename FRESCOLAT® type MGA); WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-caxboxamide; and Menthol methyl ether, and menthyl pyrrolidone carboxylate among others. The cooling agents described here and other suitable cooling agents are further described in the following U.S. patents, all of which are incorporated in their entirety by reference hereto: U.S. 4,230,688; 4,032,661; 4,459,425; 4,136,163; 5,266,592; 6,627,233.

While any of the above-disclosed physiological cooling agents may be used in chewing gum, the presently preferred physiological cooling agents are substituted p-menthane carboxamides (PMC), such as those disclosed in U.S. Patent Nos. 4,060,091; 4,190,643 and 4,136,163, all assigned to Wilkinson Sword, especially N-ethyl-p-rnenthane-3.. carboxamide (called WS-3); acyclic carboxamides (AC), such as those disclosed in U.S. Patent Nos. 4,296,255; 4,230,689; and 4,153,679; all assigned to Wilkinson Sword, especially N-2,3-trimethyl-2-isopropyl butanamide (called WS-23); menthone glycerol ketal (MGK); menthyl lactate (ML); menthyl succinate (MS); and 3-1-menthoxypropane-1,2-diol (TCA).

Other preferred physiological cooling agents are described in WO97/06695. Some include menthol, peppermint oil, N-substituted-p-menthane-3-carboxamides, acyclic tertiary and secondary carboxamides, 3-1-menthoxy propan-1,2-diol and mixtures thereof. Some carboxamides found most useful are those described in U.S. Patent No. 4,136,163, Jan. 23, 1979 to Watson et al., and U.S. Patent No. 4,230, 688, Oct. 28, 1980 to Rowsell et al. The carboxamides in U.S. Patent No. 4,136,163 are N-substituted-p-menthane-3-carboxamides. N-ethyl-p-menthane-3-carboxamide, commercially available as WS-3 from Wilkinson Sword, is preferred herein. The carboxamide of U.S. Patent No. 4,230,688 are certain acyclic tertiary and secondary carboxamide, of which trimethyl isopropyl butanamide, commercially available as WS-23 from Wilkinson Sword is one preferred cooling agent for use herein. Others include WS-3, WS-14, WS-23 and the like.

The following test procedure can be used as a means to identify compounds having a physiological cooling activity. This test is intended purely as a means for identifying compounds having a physiological cooling agent activity and useful in the present compositions and for giving an indication of the different relative activities of the compounds, as between themselves and as compared with menthol, when applied in particular manner to a particular part of the body. The results are not necessarily indicative of the activity of these compounds in other formulations and other parts of the body where other factors come into play. For example, a controlling factor in the onset of cooling effect, its intensity and longevity will be the rate of penetration of the compounds through the epidermis or mucous membrane and this will vary in different locations on the human body. The formulation of actual products will therefore be done largely on an empirical basis although the test results given herein will be useful as a guide, particularly in the formulation of products for oral administration, since the test procedure to be described involves oral application of the compound. A similar test may, of course, be devised for the purposes of measuring the relative activities of the compounds of another area of the body, for example, the face or forearm, and this will be a useful guide in the choice of compounds to be used in preparations for external topical usage. It will also be noted that the described test procedure is done on a statistical basis. This is necessary since sensitivity to these compounds will vary not only from compound to compound and from one part of the body to another, but also from one individual to another. Tests of this nature are commonly used in the testing of the organoleptic properties e.g. taste and smell of organic and inorganic compounds, see Kirk Othmer: Encyclopedia of Chemical Technology, 2nd Ed. (1967) Viol. 14, pages 336-344.

The following test procedure is aimed at determining the minimum quantity of the test compound required to produce a noticeable cooling effect in a person of average sensitivity, this minimum quantity being termed the threshold for that particular compounds, The tests are carried out on a selected panel of 6 people of median sensitivity to 1-menthol.

To select a test panel of average sensitivity the following procedure is used. Known quantities of 1-menthol in solution in petroleum ether (bp. 40-60 degrees C.) are placed on 5 mm squares of filter paper, after which the solvent is allowed to evaporate. A panel of observers is enrolled and asked to place one impregnated square at a time on the tongue and to report on the presence or absence of a cooling effect. The quantity of 1-menthol on each impregnated square is gradually reduced from a value substantially above 0.25 micrograms per square to substantially below 0,25 micrograms, the precise range being immaterial. Conveniently, one starts with squares containing 2.0 micrograms being half that of the preceding square, i.e. the second test square will contain 1.0 microgram, the third 0.5 microgram, and so on. Each quantity is tested on the tongue at least 10 times. In this way, the thresholds to cold receptor stimulus by 1-menthol are determined for each individual of the panel, the threshold for each individual being that amount of 1-menthol for which, in a series of not less than 10 test applications, a cooling effect is reported 50% of the time. Six panel members are now selected whose threshold to 1-menthol is in the range 0.1 micrograms to 10 micrograms and whose average threshold is approximately 0.25 micrograms, this select panel being regarded as the test panel of average sensitivity.

To test the activity of cooling agents, the above procedure is repeated using only the 6 selected panel members of average sensitivity to 1-menthol. The individual thresholds for each test compound on each of the 6 selected panel members are determined and averaged. Those compounds whose average threshold on the select test panel is 100 micrograms or less, preferably 50 micrograms or less are regarded as having cooling activity.

The balance of the cooling composition is made up of a suitable appropriate carrier, such as water or a bulk sweetener, described in more detail below.

The cooling compositions can be used in any products intended for oral, skin or mucosal delivery as a component for providing a sensation of cooling and for providing a physiological effect substantially similar to that provided by menthol alone. The products for which the compositions are useful include, but are not limited to, food and drink, such as candies, drops, chewing gums, tablets, chocolates, cakes, cookies, snack food, bread, tea, coffee, juice, fruit drinks, fruit wine, dairy drinks, carbonated beverages, alcoholic beverages and seasonings; and oral care preparations, such as mouthwash, toothpaste, nebulizers, drinks, medicinal drops, gargles, and chewables.

The following illustrate a more comprehensive range of products into which the cooling compositions can be incorporated. These include, for instance, edible or potable compositions including alcoholic and non-alcoholic beverages, confectionery, chewing gum; cachous; ice cream; jellies. These further include toiletries including after shave lotions, shaving soaps, creams and foams, toilet water, deodorants and antiperspirants, "solid ' colognes," toilet soaps, bath oils and salts, shampoos, hair oils, talcum powders, face creams, hand creams, sunburn lotions, cleansing tissues, dentifrices, toothpicks, mouthwashes, hair tonics, eye drops. Additionally, the range extends to medicaments including antiseptic ointments, pile ointments, liniments, lotions, decongestants, counter-irritants, cough mixtures, throat lozenges, antacid and indigestion preparations, oral analgesics. Also contemplated are tobacco preparations including cigars, cigarettes, pipe tobacco, chewing tobacco and snuff; tobacco filters, especially filter tips for cigarettes. Even further are contemplated miscellaneous compositions, such as water soluble adhesive compositions for envelopes, postage stamps, adhesive labels etc.

The edible and potable compositions may contain the cooling composition in combination with an edible carrier and usually a flavoring or coloring agent. In general, the cooling composition will be present in amounts in the range 0.1 to 5% by weight based on the total composition. Similar considerations apply to the formulation of beverages. In general, the amount of the cooling composition used will generally be in the range 0.1 to 2.5% by weight based on the total product composition. Because of the cooling sensation imparted to the skin, the amount of the cooling composition added to toiletries will usually be in the range 0.1 to 10% by weight based on the total product composition. Medicaments will normally feature an amount of the cooling composition of from 0.01 to 2.0% by weight of the total composition. Tobacco preparations may contain as little as 0.1 mg. of the cooling composition.

In addition to the cooling composition described herein, these product compositions can contain other additives according to use. For example, additives permitted by Food Sanitation Law can be added to food and drink according to necessity. Useful additives include saccharides, sweeteners, inorganic salts, emulsifiers, acidifies, flavorings, colors, antioxidants, raising agents, thickeners, vegetable oils, milk, and other dairy products. In some detail, bakery products can comprise wheat flour (base), butter, a raising agent, e.g., baking powder, an emulsifier, e.g., a sucrose fatty acid ester, saccharides, e.g., sugar, inorganic salts, and flavorings. Chocolate can comprise cacao mass (base) cacao butter, saccharides, e.g., sugar, milk, and an emulsifier. Emulsified dressings can comprise salad oil, water, vinegar, sugar, thickening polysaccharides, and sweeteners, Chewing gum can comprise a gum base, saccharides, such as sugar, glucose and starch syrup, and flavors. Candy can comprise saccharides, acidifiers, e.g., citric acid, sweeteners, flavorings, and colors. Orange fruit drinks can comprise orange juice, sweeteners, e.g., isomerized sugars, acidifiers, e.g., citric acid, and antioxidants, e.g., vitamin C. Fruit milk drinks can comprise fruit juice, dairy products such as milk and powdered skim milk, saccharides, e.g., sugar, stabilizers, e.g., carboxymethyl cellulose, acidifiers, e.g., citric acid, and flavoring, e.g., a pineapple flavor.

In particular embodiments, the cooling compositions are used in chewing gums. Some chewing gum formulations are described in, for instance, U.S. Patent Nos: 6,627,233, 6,685,916 and 6,696,044, incorporated herein by reference.

Additives which can be used in the product compositions include inorganic salts, inorganic oxides, organic salts, thickeners, wetting agents, emulsifiers, surface active agents, humectants, color additives, flavorings, and, if desired, medical ingredients such as crude drugs, hemostatics, circulation stimulants, anti-inflammatory agents, astringents, antibacterial and/or antifungal agents, and bactericides.

In particular embodiments, toothpaste can comprise abrasives, such calcium phosphate, as calcium carbonate, aluminum hydroxide, silica, and calcium pyrophosphate; wetting agents, such as glycerin, sorbitol, and propylene glycol; tackifiers, such as carboxymethyl cellulose, carrageenan, and hydroxyethyl cellulose; surface active agents, such as sodium laurylsulfate, N-acylglutaminates, and sucrose fatty acid esters; sweeteners, such as saccharin sodium, stevioside, and xylitol; and medicinal components, such as vitamin E, azulene, aluminum chlorohydroxy allanthoinate, dextranase, hinokitiol, lysozyme chloride, and chlorhexidine.

### Chewing Gum Compositions

In particular embodiments, the cooling compositions are used in chewing gums and confectionaries. Compositions of chewing gum and confectioneries are well known in the art and described in depth in, for instance, U.S. Patent Nos: 6,685,916,6,627,233,6,685,916 and 6,696,044, the disclosures of which are incorporated by reference and some of which is summarized herein.

As used herein, the term "chewing gum" is meant to include any gum compositions. Chewing gum compositions typically include one or more of gum bases, flavoring agent and bulk sweeteners. The chewing gum compositions may be coated or uncoated and be in the form of slabs, sticks, pellets, balls and the like. The formulation of the different forms of the chewing gum compositions will be similar but may vary with regard to the ratio of the ingredients. For example, coated gum compositions may contain a lower percentage of softeners. Pellets and balls have a small chewing gum core, which is then coated with either a sugar solution or a sugarless solution to create a hard shell. Slabs and sticks are usually formulated to be softer in texture than the chewing gum core. In order to overcome any detrimental softening effect the surfactant active may have on the gum base, it is preferred to formulate a slab or stick gum having a firmer texture (i.e. with less softener than is typically employed).

The cooling composition may be used in either regular chewing gum or bubble gum. Centerfilled gum is another common gum form in which the cooling composition may be used. The gum portion has a similar composition and mode of manufacture to that described above. However, the centerfill is typically an aqueous solution or gel, which is injected into the center of the gum during processing. The cooling compositions, alone or in combination with warming or heating compositions, could optionally be incorporated together or singly into the centerfill during manufacture of the fill or into the chewing gum. Suitable warming or heating compositions are described, for example, in copending, commonly assigned U.S. Application No. 11/201,370, filed August 10, 2005, the contents of which are incorporated herein by reference. The centerfill gum may also be optionally coated and may be prepared in various forms such as in the form of a lollipop.

It is preferred to use a coated gum wherein the cooling compositions described herein are in at least one of the core and the coating.

The chewing gum composition includes gum base and most of the other typical chewing gum composition components such as sweeteners, softeners, flavoring agents and the like. The chewing gum composition may contain a reduced amount of softening agents such as lecithin or glycerin or may eliminate softeners. In addition, the chewing gum composition may contain a lager or smaller amount of sugar alcohols than conventional chewing gum compositions to facilitate delivery.

In accordance with one aspect of the chewing gum composition, the cooling compositions are added during the manufacture of the chewing gum composition, that is, with the sweeteners, flavoring agents and the like. -

In a further aspect, the gum base generally includes elastomers, elastomer plasticizers, waxes, fats, oils, emulsifiers, fillers, texturizers, elastomer solvents, plasticizers and may include the cooling composition. The gum base may further include a warming or heating composition, if desired. Elastomers constitute from about 5% to 95% by weight of the base, preferably 10% to 70% by weight and most preferably 15% to 45% by weight. The elastomer may be any water-insoluble polymer known in the art and includes those gum polymers utilized for chewing gums and bubble gums. Illustrative examples of suitable polymers in gum bases include both natural and synthetic elastomers. Examples of elastomers include synthetic elastomers such as polyisobutylene, polybutylene, isobutylene-isoprene co-polymers, styrene-butadiene co-polymers, polyvinylacetate and the like. Elastomers may also include natural elastomers such as natural rubber as well as natural gums such as jelutong, lechi caspi, perillo, massaranduba balata, chicle, crown gum, nispero, rosidinha, niger gutta, tuna, guttapercha, sorva, gutta kay, gutta hang kang or mixtures thereof. Other elastomers are known to those of ordinary skill in the art.

Elastomer plasticizers modify the firmness of the finished chewing gum when used in the gum base. Elastomer plasticizers are typically present in an amount of up to about 75% by weight of the gum base, preferably from about 5% to 45% by weight and more preferably from about 10% to 30% by weight. Examples of elastomer plasticizers include natural rosin esters such as glycerol ester of partially hydrogenated rosin, glycerol ester of tall oil rosin, pentaerythritol esters of partially hydrogenated rosin, methyl and partially hydrogenated methyl esters of rosin, and the like. Synthetic elastomer plasticizers such as terpene resins may also be employed in gum base composition.

Waxes include synthetic and naturally occurring waxes such as polyethylene, bees wax, carnauba and the like. Petroleum waxes such paraffin may also be used. When present in the gum base, the waxes employed will have a melting point below 60°C and preferably between about 45°C and about 55°C. The waxes may be present in the amount of up to about 30% by weight of the gum base. However, typically, the wax may be present in the gum base in an amount from about 6% to about 10%, and preferably from about 7% to about 9.5% by weight of the gum base. Waxes aid in the curing of the finished chewing gum and help improve the release of flavor and may extend the shelf life of the product.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. The emulsifier may be employed in amounts from about 2% to about 15%, and more specifically, from about 7% to about 11%, by weight of the gum base.

Fillers modify the texture of the gum base and aid processing. Examples of such fillers include calcium carbonate, magnesium carbonate, aluminum hydroxide, magnesium and aluminum silicates, clay, alumina, talc, titanium oxide, cellulose polymers, tricalcium phosphate, dicalcium phosphate, calcium sulfate, and the like. Fillers are typically present in an amount of from 1% to 60% by weight. Preferably, the amount of filler, when used, will be present in an amount from about 15% to about 40% and desirably from about 24% to about 30%, by weight of the gum base.

The gum base may include plasticizers or softeners to provide a variety of desirable textures and consistency properties. Examples of softeners used in the gum base include hydrogenated and partially hydrogenated vegetable oils, cocoa butter, glycerol monostearate, glycerol triacetate, di- and triglycerides, fatty acids such as stearic acid, palmitic acid, oleic acid, linoleic acid, linolenic acid and the like. The plasticizers and softeners are generally employed in the gum base in amounts of up to about 20% by weight of the gum base. Softeners in the gum compositions are typically present in amounts of from about 0.5% to 10% by weight based on the total weight of the chewing gum composition.

The gum base constitutes between 5% and 95% by weight of the chewing gum composition, more typically 10% to 50% by weight, and most typically from about 25% to 35% by weight of the chewing gum. A higher amount of gum base is preferred.

A variety of traditional ingredients may be optionally included in the gum base in effective amounts such as flavor agents and coloring agents, antioxidants, preservatives, and the like. For example, titanium dioxide and other dyes suitable for food, drug and cosmetic applications, known as F.D. & C. dyes, may be utilized. An anti-oxidant such as butylated hydroxytoluene (BHT), butylated hydroxyanisole (BHA), propyl gallate, vitamin E and mixtures thereof, may also be included. Other conventional chewing gum additives known to one having ordinary skill in the chewing gum art may also be used in the gum base.

The chewing gum compositions may include amounts of conventional additives selected from the group consisting of sweetening agents, plasticizers, softeners, emulsifiers, waxes, fillers, bulking agents (carriers, extenders, bulk sweeteners, mineral adjuvants, flavor agents and coloring agents, antioxidants, acidulants, thickeners, medicaments, oral care actives, such as remineralization agents, antimicrobials and tooth whitening agents, as described in assignee's co-pending U.S. Patent Application No. 10/901,511, filed on July 29, 2004 and entitled "Tooth Whitening Compositions and Delivery Systems Therefor," which is incorporated herein by reference in its entirety, and the like, and mixtures thereof. Some of these additives may serve more than one purpose. For example, in sugarless gum compositions, a sweetener, such as maltitol or other sugar alcohol, may also function as a bulking agent.

Sweeteners suitable for use in the chewing gum compositions include both natural and artificial and both sugars and sugarless bulk sweeteners. Bulk sweeteners may be present in amounts of about 5% to about 99% by weight of the gum composition. Sweeteners are typically present in the chewing gum compositions in amounts of from about 20% to 80% by weight, preferably from about 30% to 60% by weight. Sugarless sweeteners include, but are not limited sugar alcohols such as sorbitol, mannitol, xylitol, hydrogenated starch hydrolysates, maltitol and the like may also be present. High intensity sweeteners such as sucralose, aspartame, Neotame, salts of acesulfame, and the like are typically present up to about 1.0% by weight.

Suitable sugar sweeteners include mono-saccharides, di-saccharides and polysaccharides such as but not limited to, sucrose (sugar), dextrose, maltose, dextrin, xylose, ribose, glucose, mannose, galactose, fructose (levulose), invert sugar, fructo oligo saccharide syrups, partially hydrolyzed starch, corn syrup solids and mixtures thereof.

Suitable sugarless bulk sweeteners include sugar alcohols (or polyols) such as, but not limited to, sorbitol, xylitol, mannitol, galactitol, maltitol, hydrogenated isomaltulose (ISOMALT), lactitol, erythritol, hydrogenated starch hydrolysates, and mixtures thereof.

Suitable hydrogenated starch hydrolysates include those disclosed in U.S. Pat. No. 4,279,931 and various hydrogenated glucose syrups and/or powders which contain sorbitol, maltitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN^{®}, a commercially available product manufactured by Roquette Freres of France, and HYSTAR^{®}, a commercially available product manufactured by SPI Polyols, Inc. of New Castle, Delaware, are also useful.

In some embodiments, high-intensity sweeteners may be used. Without being limited to particular sweeteners, representative categories and examples include:
(a) water-soluble sweetening agents such as dihydrochalcones, monellin, stevia, steviosides, rebaudioside A, glycyrrhizin, dihydroflavenol, and sugar alcohols such as sorbitol, mannitol, maltitol, xylitol, erythritol and L-aminodicarboxylic acid aminoalkenoic acid ester amides, such as those disclosed in U.S. Pat. No. 4,619,834, which disclosure is incorporated herein by reference, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame) and materials described in U.S. Pat. No. 3,492,131, L-alphaaspartyl-N-(2,2,4,4-tetramethyl-3-thietanyl)-D-alaninamide hydrate (Alitame), N-[N-(3,3-dimethylbutyl)-L-aspartyl]-L-phenylalanine 1-methyl ester (Neotame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galectopyranosyl-alpha-D-fructofuranoside, or 4-chloro-4-deoxygalactosucrose; 4-chloro-4-deoxy-alpha-D-galactopyranosy1-1-chloro-1-deoxy-beta-D-fructo-f uranoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6, 1',6-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; and 4,6,1',6'-tetradeoxy-sucrose, and mixtures thereof;
(e) protein based sweeteners such as thaumaoccous danielli (Thaumatin I and II) and talin;
(f) the sweetener monatin (2-hydroxy-2-(indol-3-ylmethyl)-4-aminoglutaric acid) and its derivatives; and
(g) the sweetener Lo han guo (sometimes also referred to as "Lo han kuo").

The intense sweetening agents may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

Flavoring agents, which can vary over a wide range, may be selected in amounts from about 0.1% to 10.0% by weight, preferably from about 0.5% to 5.0% by weight. Flavouring agents for use in chewing gum compositions are well known and include citrus oils, peppermint oil, spearmint oil, oil of wintergreen, Menthol, cinnamon, ginger and the like.

Other materials, which may be present in the chewing gum composition include antioxidants (e.g. butylated hydroxyanisole, butylated hydroxytoluene, beta-carotenes, tocopherols), colorants, flavoring agents and the like.

The chewing gum products may be prepared using standard techniques and equipment known to those skilled in the art. The apparatus useful in accordance with the embodiments described herein includes mixing and heating apparatus well known in the chewing gum manufacturing arts, and therefore the selection of the specific apparatus will be apparent to the artisan. For general chewing gum preparation processes see U.S. Patent Nos. 4,271,197 to Hopkins et al, 4,352,822 to Cherukuri et al and 4,497,832 to Cherukuri et al, each of which is incorporated herein by reference in its entirety.

Coating techniques for applying a coating for a chewing gum composition such as pan and spray coating are well known. Preferred is coating with solutions adapted to build a hard candy layer. Both sugar and sugar alcohols may be used for this purpose together with high intensity sweeteners, colorants, flavoring agents, binders and other conventional additives. When the combination of stain removing agents is provided in the coating of a chewing gum composition, a solution of the stain removing agents is preferably, alternately applied with the flavoring agent.

The sweetener may be present in an amount of from about 30% to 80% by weight of the coating syrup. A binder such as magnesium stearate may be added to the coating syrup in an amount of from about 1% to 15% by weight of the coating syrup to enhance or promote adhesion. Optionally, minor amounts of conventional additives may also be present. The sweeteners suitable for use in the coating syrup comprise sugarless sweeteners such as the polyhydric alcohols, e.g., xylitol, sorbitol, mannitol, and mixtures, thereof; as well as maltitol, isomaltitol, hydrogenated starch hydrolysates, and hydrogenated glucose syrups. Mono, di- and polysaccharide may also be included. For example, sugars such as sucrose, fructose, glucose, galactose and maltose may also be employed as a sweetener. Other sweeteners suitable for use in the coating syrup include, but are not limited to free saccharin acid, water soluble salts of saccharin, cyclamate salts, palatinit dihydrochalcones, glycyrrhizin, L-aspartyl-L-phenylalanine methyl ester, amino acid based sweeteners, talin, steviosides, dihydrochalcone compounds, acesulfame salts and mixtures thereof.

Other ingredients may be added in minor amounts to the coating syrup and include moisture absorbing compounds, anti-adherent compounds, dispersing agents and film forming agents. The moisture absorbing compounds suitable for use in the coating syrups include mannitol or dicalcium phosphate. Examples of useful anti-adherent compounds, which may also function as filler, include talc, magnesium trisilicate and calcium carbonate. These ingredients may be employed in amounts of about 0.5% to 5% by weight of the syrup. Examples of dispersing agents, which may be employed in the coating syrup, include titanium dioxide, talc or other anti-adherent compounds as set forth above.

The coating syrup is usually heated and a portion thereof deposited on the cores. Usually a single deposition of the coating syrup is not sufficient to provide the desired amount or thickness of coating and it usually will be necessary to apply second, third or more coats of the coating syrup in order to build up the weight and thickness of the coating to desired levels with layers allowed to dry in-between coats.

In some embodiments of the chewing gum composition, the cooling compositions imparting a physiological sensation substantially the same as menthol are added to the coating. They are preferably applied subsequent to the syrup coating. Further details regarding the preparation of chewing gum compositions can be found in Skuse's Complete Confectioner (13th Edition) (1957) including pp. 41-71. 133-144, and 255-262; and Sugar Confectionery Manufacture (2nd Edition) (1995), E. B. Jackson, Editor, pp. 258-286, the content of which is incorporated herein by reference.

### Confectionary Compositions

The present description also encompasses confectionery products containing a cooling composition of individual agents that in total impart a physiological effect substantially similar to that of menthol alone. The term "confectioneries" as used herein includes, but is not limited to: nougats, candies, panned goods, gel confections, fondants, chewy candies, gummy candies, lozenges, hard boiled candies, mints, troches, pastilles, microcapsules, and fast-dissolving solid forms including freeze dried forms (cakes, wafers, thin films, and tablets) and fast dissolving solid forms including compressed tablets. The term "fast dissolving solid form" as used herein means that the solid dosage form dissolves in less than about 60 seconds, preferably less than about 15 seconds, more preferably less than about 5 seconds, in the oral cavity. Lozenges include discoid shaped solids comprising a therapeutic agent in a flavored base. The base may be a hard sugar candy, glycerinated gelatin, or a combination of sugar with sufficient mucilage to give it form. Compressed tablet forms typically include one or more fillers (compressible sugar), flavoring agents and lubricants. As used herein, the term "confectioneries" can also include fat-based confections such as chocolate, milk chocolate, dark chocolate, white chocolate, and combinations thereof.

Confectionery compositions may include a confectionery base and any of the cooling compositions described above. The confectionery compositions also may include a variety of optional additives, as provided in more detail below. Upon consumption, the cooling composition releases from the confection and imparts a physiological effect substantially similar to that of menthol.

A confectionery base may include bulk sweeteners such as sugars and sugarless bulk sweeteners, or the like, or mixtures thereof. Bulk sweeteners generally are present in amounts of about 0.05% to about 99% by weight of the composition.

A variety of traditional ingredients also may be included in the confectioneries in effective amounts such as coloring agents, antioxidants, preservatives, sweeteners, and the like. Coloring agents may be used in amounts effective to produce the desired color. The coloring agents may include pigments which may be incorporated in amounts up to about 6%, by weight of the composition. For example, titanium dioxide may be incorporated in amounts up to about 2%, and preferably less than about 1%, by weight of the composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated, herein by reference.

Lubricants also may be added in some embodiments to improve the smoothness of the comestible, such as, for example hard candy embodiments. Smoothness also is a characteristic that leads to an increased perception of hydration upon consumption. Suitable lubricants include, but are not limited to, fats, oils, aloe vera, pectin and combinations thereof.

Similarly, in some embodiments, the comestible may have smooth edges. In such embodiments, the comestible may have any shape, such as square, circular or diamond-shaped, however, the edges are rounded to provide a smooth comestible. Another manner of lending smoothness to the comestibles is to deposit the comestible composition into moulds during the manufacturing process. Accordingly, in some embodiments, the comestible is deposited, as described in more detail below.

In some embodiments, the confectionery composition may further include a sweetener selected from Lo han guo, stevia, monatin and combinations thereof.

Other conventional additives known to one having ordinary skill in the art also may be used in the confectionery compositions.

In some embodiments, confectionery compositions may be produced by batch processes. Such confections may be prepared using conventional apparatus such as fire cookers, cooking extruders, and/or vacuum cookers. In some embodiments, the bulk sweetener (sugar or sugar free) and a solvent (e.g., water), are combined in a mixing vessel to form a slurry. The slurry is heated to about 70°C to 120°C to dissolve any sweetener crystals or particles and to fonn an aqueous solution. Once dissolved, heat and vacuum are applied to cook the batch and boil off water until a residual moisture of less than about 4% is achieved. The batch changes from a crystalline to an amorphous, or glassy, phase. The cooling composition then may be admixed in the batch by mechanical mixing operations, along with any other optional additives, such as coloring agents, flavorants, and the like. The batch is then cooled to about 50°C to 10°C to attain a semi-solid or plastic-like consistency.

The optimum mixing required to uniformly mix the components during manufacturing of hard confectionery is determined by the time needed to obtain a uniform distribution of the materials. Normally, mixing times of from four to ten minutes have been found to be acceptable. Once the candy mass has been properly tempered, it may be cut into workable regions or formed into desired shapes having the correct weight and dimensions. A variety of forming techniques may be utilized depending upon the shape and size of the final product desired. Once the desired shapes are formed, cool air is applied to allow the comestibles to set uniformly, after which they are wrapped and packaged.

Alternatively, various continuous cooking processes utilizing thin film evaporators and injection ports for incorporation of ingredients including the cooling compositions are known in the art and may be used as well.

The apparatus useful in accordance with some embodiments comprise cooking and mixing apparatus well known in the confectionery manufacturing arts, and selection of specific apparatus will be apparent to one skilled in the art.

Additionally, in some embodiments, various confectionery configurations with multiple regions may be employed. These configurations may include, but are not limited to, liquid center-fill, powder center-fill, hard coated, soft coated, laminated, layered and enrobed. In some embodiments, the cooling composition may be included in one region or in multiple regions of the product.

Confectionery compositions in the form of pressed tablets such as mints may generally be made by combining finely sifted sugar or sugar substitute, flavoring agent (e.g. peppermint flavor), bulking agent such as gum arabic, and an optional coloring agent. The flavoring agent and the bulking agent are combined and then gradually the sugar or sugar substitute are added along with a coloring agent, if needed.

The product is then granulated by passing through a sieve of desired mesh size (e.g. 12 mesh) and then dried at typically 55° C to 60° C. The resulting powder is fed into a tableting machine fitted with a large size punch and the resulting pellets are broken into granules and then pressed.

High boiled candies typically contain sugar or sugar substitute, glucose, water, flavoring agent and optional coloring agent. The sugar is dissolved in the water and glucose is then added. The mixture is brought to a boil. The resulting liquid to which may previously have been added a coloring agent is poured onto an oiled slab and cooled. The flavouring agent is then added and kneaded into the cooled mass. The resulting mixture is then fed to a drop roller assembly known in the art to form the final hard candy shape.

A nougat composition typically includes two principal ingredients, a high boiled candy and a frappe. By way of example, egg albumen or substitute thereof is combined with water and whisked to form a light foam. Sugar and glucose are added to water and boiled typically at about 130°C to 140° C. and the resulting boiled product is poured into a mixing machine and beat until creamy. The beaten albumen and flavoring agent are combined with the creamy product and the combination is thereafter thoroughly mixed.

Further details regarding the preparation of confectionery compositions can be found in Skuse's Complete Confectioner (13th Edition) (1957) including pp. 41-71, 133-144, and 255-262; and Sugar Confectionery Manufacture (2nd Edition) (1995), E. B. Jackson, Editor, pp. 129-168, 169-188, 189-216, 218-234, and 236-258, the content of which is incorporated herein by reference.

### Soft Confectionery Compositions

In some embodiments, the orally delivered product may be in the form of various soft confectionery formats. Soft confectionery formats may include, but are not limited to, nougat, caramel, taffy, gummies and jellies.

Soft confectionery compositions may include a confectionery base and any of the cooling compositions described above, which may include at least one active substance and at least one cooling agent. The soft confectionery compositions also may include a variety of optional additives, such as any of the additives set forth above in the section describing confectionery compositions. Upon consumption, the composition containing the active(s) and the cooling agent(s) releases from the soft confection and provides an enhanced perception of the active(s) contained therein.

For example, in some embodiments, the active substance may be at least one sweetener, such as, a sugar sweetener, sugarless bulk sweetener, intense sweetener or any combination thereof. In general, the active substance(s) may be present in amounts of about 0.0001% to about 75% by weight of the soft confectionery composition. In some embodiments, which include actives other than intense sweeteners, the active substance(s) may be present in amounts of about 25% to about 75% by weight of the soft confectionery composition. The cooling agent(s) may be present in amounts of about 0.01% to about 10% by weight of the soft confectionery composition.

Some soft confectionery compositions include nougat compositions, which may include two principal components, a high-boiled candy and a frappe. By way of example, egg albumen or substitute thereof is combined with water and whisked to form a light foam. Sugar and glucose are added to water and boiled typically at temperatures of from about 130°C to 140°C and the resulting boiled product is poured into a mixing machine and beaten until creamy. The beaten albumen and flavoring agent are combined with the creamy product and the combination is thereafter thoroughly mixed.

In some embodiments, a caramel composition may include sugar (or sugar substitute), corn syrup (or polyol syrup), partially hydrogenated fat, milk solids, water, butter, flavors, emulsifiers, and salt. To prepare the caramel, the sugar/sugar substitute, corn syrup/polyol syrup, and water may be mixed together and dissolved over heat. Then, the milk solids may be mixed in to the mass to form a homogeneous mixture. Next, the minor ingredients may be mixed in with low heat. The heat then may be increased to boiling. Once sufficient water is removed and color/flavor developed, the mass may be cooled somewhat and temperature sensitive ingredients (including some cooling agents) may be mixed in prior to discharging and forming/shaping/wrapping the finished product.

In some embodiments, a taffy composition may include sugar (or sugar substitute), corn syrup (or polyol syrup), partially hydrogenated fat, water, flavors, emulsifiers, and salt. The process for preparing taffy can be similar to that for caramel and, optionally, the final taffy mass may be pulled to develop its desired texture.

In some embodiments, a gummi (also spelled gummy) composition may include sugar (or sugar substitute), corn syrup (or polyol syrup), gelatin (or suitable hydrocolloid), flavor, color, and optionally acid. The gummi may be prepared by hydrating the gelatin or suitable hydrocolloid, heating the sugar/corn syrup (sugar substitute/polyol syrup) and combining the two components with heat. Once the combined mixture reaches its final temperature or suitable sugar solids level, components such as flavor, color, and the like may be incorporated into the mixture and then poured into molds prior to cooling, wrapping, and finishing. Various surface treatments such as applications of wax or fat can be applied to decrease sticking.

In some embodiments, a jelly composition may include a starch-based jelly or a pectin-based jelly. As with gummis, jelly products may be produced by hydrating the hydrocolloid and combining the hydrated mixture with a cooked syrup component. The mixture then may be cooked to a final moisture content and minor components may be incorporated. As with gummis, jelly candies may be poured into molds such as starch molds. As with gummis, surface treatments, such as fats or waxes, may be applied. Additionally, jelly candies may have dry surface treatments, such as applications of sanding sugar, acid, non-pareils, and the like.

Additionally, in some embodiments, various soft confectionery configurations with multiple regions may be employed. These configurations may includes, but are not limited to, liquid center-fill, powder center-fill, hard coated, soft coated, laminated, layered and enrobed. In some embodiments, the cooling composition may be included in one region or in multiple regions of the product.

The present cooling compositions and methods will now be illustrated in greater detail with reference to Examples in view of Comparative Examples, but it should be understood that the methods and compositions are not limited thereto. Unless otherwise noted, all the percents are by weight.

### Chocolate Confectionery Compositions

In some embodiments, the orally delivered product may be in the form of various chocolate confectionery formats. Chocolate confectioneries can include milk chocolate, dark chocolate, and/or white chocolate. Milk chocolate can include milk solids with other milk chocolate ingredients such as cocoa liquor, cocoa butter and/or other fats, sweeteners, emulsifiers, flavors, and the like. In some embodiments, the milk solids can be in an amount of 5% by weight of the milk chocolate composition to amounts of greater than 40% by weight of the milk chocolate composition. The milk solids can be in the form of dry milk powder or liquid milk.

Dark chocolate can include ingredients as in milk chocolate but may have little to no milk solids components. White chocolate can include ingredients such as fats, sweeteners, flavors, emulsifiers, and the like but does not contain cocoa liquor. White chocolate is also referred to as compound coating.

Suitable methods for combining chocolate ingredients are well known to those skilled in the art, and include for example a food grade blender, a mixer, etc.

### EXAMPLES

### EXAMPLE 1

### Compositions Providing Physiological Sensation Substantially Similar to Menthol

The following cooling compositions providing substantially the same physiological sensation as menthol were prepared. The relative amounts of each component are expressed as weight percent.

**TABLE 1A**

| **Cooling Composition A** | |
|---|---|
| **Component** | **% by weight** |
| menthone | 12.0 |
| iosmenthone | 12.0 |
| isopulegol | 4.0 |
| monomenthyl succinate | 22.0 |
| Menthyl lactate | 27.0 |
| WS-14 | 20.0 |
| viridiflorol crystals | 3.0 |
| Total | 100 |

**TABLE 1B**

| **Cooling Composition B** | |
|---|---|
| **Component Compound** | **% by weight** |
| menthone | 22.0 |
| isomenthone | 22.0 |
| isopulegol | 6.0 |
| monomenthyl succinate | 18.0 |
| Menthyl lactate | 24.0 |
| viridiflorol crystals | 5.0 |
| camphor | 1.0 |
| Encalyptol | 1.0 |
| | 100 |

### EXAMPLE 2

### Sensory Evaluation

The following five compositions were prepared in the weight percent amounts indicated and were tested in trials for the sensation imparted by the resulting composition in relation to menthol alone. The data shows expert panel evaluations on the four characteristics described and are measured using menthol as a reference that would score 100. Respondents were asked to evaluate the similarity to menthol or the similarity of a physiological sensation to that same physiological sensation imparted by menthol based on a score of 1 to 100 with 1 being "dissimilar to menthol" and 100 being "substantially identical to menthol." The results are indicated in Table 2; however Cooling Composition D does not form part of the present invention.

**TABLE 2**

| **Cooling Compositions C-G** | | | | | |
|---|---|---|---|---|---|
| | **% by weight** | | | | |
| **Component** | **C** | **D** | **E** | **F** | **G** |
| WS-3 | 12.63 | 11.71 | 0.00 | 0.00 | 0.00 |
| Menthone | 10.53 | 9.76 | 11.00 | 20.00 | 21.53 |
| Isomenthone | 10.53 | 9.76 | 11.00 | 20.00 | 21.53 |
| Isopulegol | 10.53 | 9.76 | 11.00 | 14.00 | 6.41 |
| Monomenthyl succinate | 21.05 | 19.50 | 20.00 | 20.00 | 18.33 |
| Menthyl glurate esters | 13.68 | 12.68 | 0.00 | 0.00 | 0.00 |
| 10% Menthyl lactate | 10.53 | 9.76 | 25.00 | 20.00 | 23.58 |
| WS-14 | 10.53 | 9.76 | 19.00 | 0.00 | 0.00 |
| Viridiflorol crystals | 0.00 | 2.44 | 3.00 | 6.00 | 5.50 |
| Eucalyptol | 0.00 | 0.00 | 0.00 | 0.00 | 1.47 |
| Camphor | 0.00 | 0.00 | 0.00 | 0.00 | 1.65 |
| Menthol | 0.00 | 4.87 | 0.00 | 0.00 | 0.00 |
| Total | 100.00 | 100.00 | 100.00 | 100.00 | 100.00 |

| **Characteristics** | | | | | |
|---|---|---|---|---|---|
| Minty Taste | 50 | 50 | 70 | 80 | 90 |
| Aroma | 50 | 60 | 60 | 70 | 95 |
| Nasal Action | 70 | 80 | 80 | 90 | 95 |
| Cooling Effect | 90 | 95 | 95 | 90 | 95 |

| | | | | | |
|---|---|---|---|---|---|
| Characteristic scores are relative to menthol =100 | | | | | |

These results demonstrate that various cooling compositions may be made that impart substantially the same physiological effect as menthol, namely a minty taste, aroma, nasal action and a cooling effect. Moreover, such cooling compositions may be formulated to prevent any initial perception of heating as is sometimes encountered when a cooling agent is provided alone. Clearly, amounts of each ingredient may be varied to attain the desired similarity to menthol in each characteristic evaluated.

### EXAMPLE 3

### Flavor Compositions Providing Physiological Sensation Substantially Similar to Menthol

The following ingredients can be mixed in the weight percent amounts indicated. The cooling compositions can demonstrate an ability to impart a physiological sensation substantially the same as that imparted by menthol alone on the tongue and throat of those who encounter the product compositions.

**TABLE 3**

| **Gum Compositions** | | |
|---|---|---|
| **Component** | **% by weight (Inventive)** | **% by Weight (Comparative)** |
| Gum Base | 25-35 | 25 - 35 |
| Lecithin | 1-2 | 1 - 2 |
| Sorbitol | 50-55 | 50 - 55 |
| Glycerin | 5-10 | 5 - 10 |
| Wintergreen Flavor | 2-4 | 2 - 4 |
| Menthol | 0.00 | 0.5 - 1.5 |
| Cooling Composition G from Example 2 | 0.5 -1.5 | 0.00 |
| Color | 0.03-0.08 | 0.03-0.08 |
| Ace-K | 0.2-1.0 | 0.2 - 1.0 |
| APM | 0.5-2.0 | 0.5 - 2.0 |
| | | |
| TOTAL | 100 | 100 |

### EXAMPLE 4

### Chewing gum and Confectionary Compositions Providing A Physiological Sensation Substantially Similar to Menthol

Chewing gum and confectionaries will be prepared having some of the components provided below in amounts within those amounts recommended by the United States government as not exceeding the FEMA recommended levels set forth below in Table 5, which are provided as ppm levels. The chewing gums and confectionary/ compositions will demonstrate an ability to impart a physiological sensation substantially the same as that imparted by menthol alone on tongue and throat of those who encounter the compositions.

**TABLE 5**

| **GRAS#** | **Component names** | **FEMA levels in GUM** | **FEMA levels in HARD CANDY** | **FEMA levels in SOFT CANDY** |
|---|---|---|---|---|
| 2665 | Menthol | 1,100 | 400 | 400 |
| 2667 | menthone | 8.7 | 71 | 71 |
| 2668 | Menthyl acetate | 5.2 | 26 | |
| 2962 | Isopulegol | NA | 23 | 23 |
| 3455 | WS-3 | 1,200 | 10 | 10 |
| 3460 | Isomenthone | 600 | 60 | 60 |
| 3748 | Menthyl Lactate | 800 | NA | NA |
| 3784 | 3-1-menthoxypropane-1,2-diol | 4,000 | 500 | 500 |
| 3804 | WS-23 | 3,000 | 50 | NA |
| 3805 | 1-menthol ethylene glycol carbonate | 20,000 | 2,000 | NA |
| 3806 | 1-menthol-1and2-propylene glycol carbonate | 10,000 | 3,000 | NA |
| 3807 | 1-menthane 1,2 glycerol ketal | 800 | NA | 80 |
| 3808 | d,1-menthone 1,2 glycerol ketal | 800 | NA | 80 |
| 3810 | Mono-menthyl succinate (physcool) | 3,750 | 600 | 600 |
| 3992 | d,1 menthol propyleneglycol carbonate | 20,000 | 2,000 | 2,000 |
| 4006 | Mono-menthyl glutarate | | | |
| 4053 | P-menthan-3,8-diol | | | |

From the foregoing description, various modifications and changes in the compositions and methods will occur to those skilled in the art. All such modifications coming within the scope of the appended claims are intended to be included therein.

All publications, including but not limited to patents and patent applications, cited in this specification are herein incorporated by reference as if each individual publication were specifically and individually indicated to be incorporated by reference herein as though fully set forth.

### ANNEX:

1. A composition providing substantially the same physiological sensation as a composition comprising menthol, wherein the composition is substantially free of menthol.
2. A composition according to item 1, wherein the composition contains no menthol.
3. A composition according to item 1 comprising at least one compound capable of providing a "nasal action" characteristic of menthol, an "aroma" characteristic of menthol, a "cooling effect" characteristic of menthol, and a "minty taste" characteristic of menthol.
4. A composition according to item 3, wherein the "nasal action" is provided by one or more of menthone, isomenthone, camphor and eucalyptol.
5. A composition according to item 3, wherein the "aroma" is provided by one or more of eucalyptol, camphor, borneol, fenchone, menthone and isomenthone.
6. A composition according to item 3, wherein the "cooling effect" is provided by one or more of isopulegol, monomenthyl succinate, and menthyl lactate.
7. A composition according to item 3, wherein the "minty taste" is provided by one or more of menthone, isomenthone, borneol, fenchone, eucalyptus, ducalyptol, ethyl benzoate, neomenthol, d-fenchone, furfurylidene butyrate,. bucchu fractions, sage oil, corn mint oil, rosemary, monomenthyl succinate, amyl salicylate, eugenol, phellendrene, propyl furoate, ethyl-3-hydroxy butyrate, hexyl valerate, anisyl propionate, anysyl butyrate, dihydrocarveol, and clary sage.
8. A composition according to item 7, wherein menthone and isomenthone are each present in about 5 to about 75 Wt. %.
9. A composition according to item 8, wherein menthone and isomenthone are present in about 10 to about 50 wt. %.
10. A composition according to item 8, wherein menthone and isomenthone are present in about 15 to about 25 wt. %.
11. A composition according to item 1 comprising monomenthyl succinate and methyl lactate, wherein each are provided in an amount of about 5 to about 75 wt. %.
12. A composition according to item 11, wherein monomenthyl succinate and methyl lactate are each provided in an amount of about 10 to about 50 wt. %.
13. A composition according to item 11, wherein monomenthyl succinate and methyl lactate are each provided in an amount of about 15 to about 30 wt. %.
14. A composition according to item 1 comprising viridifloral, wherein viridifloral or another fixative is present in an amount of about 1 to about 10 wt. %.
15. A composition according to item 14, wherein viridifloral or another fixative is present in an amount of about 3 to about 6 wt. %.
16. A composition according to item 1 comprising isopulegol, wherein isopulegol is present in an amount of about 1 to about 10 wt. %.
17. A composition according to item 16, wherein isopulegol is present in an amount of about 3 to about 6 wt. %.
18. A composition according to item 3 further comprising a cooling agent in addition to the compounds that provide a substantial menthol sensation.
19. A composition according to item 18, wherein the cooling agent is selected from the group consisting of:
   (1) a compound represented by formula (I): 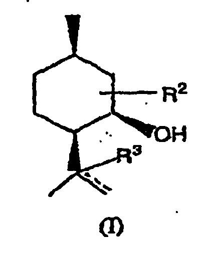 wherein R² and R³ each represent a hydrogen atom or a hydroxyl group, represents a single bond or a double bond, the same definition applies hereinafter,
   (2) a compound represented by formula II): 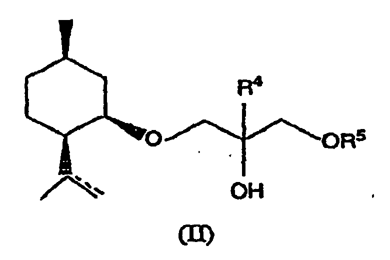 wherein R⁴ represents a hydrogen atom or a methyl group; R⁵ represents a hydrogen atom, a lower alkyl group or a 2-alkoxyethyl group,
   (3) a compound represented by formula (III): 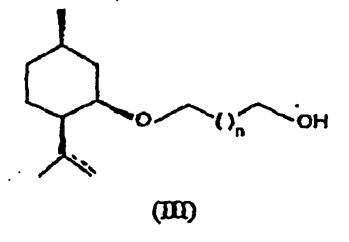 wherein n represents an integer of 1 to 10,
   (4) a compound represented by formula (IV): 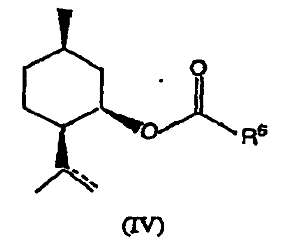 wherein R⁶ represents a hydrogen atom, a straight-chain or branched alkyl or alkenyl group, or a straight-chain or branched hydroxyalkyl group, and
   (5) a compound represented by formula (V): 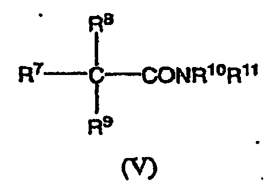 wherein R¹⁰ and R¹¹, when taken together, represent an alkylene group of up to 6 carbon atoms, the opposite ends of which group are attached to the amide nitrogen atom thereby to form a nitrogen heterocycle, the carbon atom chain of which may optionally be interrupted by oxygen;
      R⁷ is hydrogen or C1 -C5 alkyl; and
      R⁸and R⁹ are each C1-C5 alkyl;
      with the provisos that
      (i) R⁷, R⁸ and R⁹ together provide a total of at least 5 carbon atoms; and
      (ii) when R⁷ is hydrogen, R⁹ is C2 -C5 alkyl and R⁹ is C3 -C5 alkyl and at least one of R⁷ and R⁸ is branched.
20. A chewing gum comprising a cooling composition including at least one cooling agent and providing substantially the same physiological sensation as a composition comprising menthol.
21. A chewing gum according to item 20 substantially free of menthol.
22. A chewing gum according to item 20 comprising a compound capable of providing a "nasal action" characteristic of menthol, an "aroma" characteristic of menthol, a "cooling effect" characteristic of menthol, and a "minty taste" characteristic of menthol.
23. A chewing gum according to item 22, wherein the "nasal action" is provided by one or more of menthone, isomenthone, camphor and eucalyptol.
24. A chewing gum according to item 22, wherein the "aroma" is provided by one or more of eucalyptol, camphor, bomeol, fenchone, menthone and isomenthone.
25. A chewing gum according to item 22, wherein the "cooling effect" is provided by one or more of isopulegol, monomenthyl succinate, and menthyl lactate.
26. A chewing gum according to item 22, wherein the "minty taste" is provided by one or more of menthone, isomenthone, borneol, fenchone, eucalyptus, ducalyptol, ethyl benzoate, neomenthol, d-fenchone, furfurylidene butyrate, bucchu fractions, sage oil, corn mint oil, rosemary, monomenthyl succinate, amyl salicylate, eugenol, phellendrene, propyl furoate, ethyl-3-hydroxy butyrate, hexyl valerate, anisyl propionate, anysyl butyrate, dihydrocarveol, and clary sage.
27. A chewing gum according to item 21 comprising a cooling composition containing menthone and isomenthone in about 5 to about 75 wt. % relative to other components in the cooling composition.
28. A chewing gum according to item 21 comprising a cooling composition containing menthone and isomenthone in about 10 to about 50 wt. % relative to other components in the cooling composition.
29. A chewing gum according to item 21 comprising a cooling composition containing menthone and isomenthone in about 15 to about 25 wt. % relative to other components in the cooling composition.
30. A chewing gum according to item 21 comprising a cooling composition containing monomenthyl succinate and methyl lactate in an amount each of about 5 to about 75 wt. % relative to other components in the cooling composition.
31. A chewing gum according to item 21 comprising a cooling composition containing monomenthyl succinate and methyl lactate in an amount of about 10 to about 50 wt. % relative to other components in the cooling composition.
32. A chewing gum according to item 21 comprising a cooling composition containing monomenthyl succinate and methyl lactate in an amount of about 15 to about 30 wt. % relative to other components in the cooling composition.
33. A chewing gum according to item 21 comprising a cooling composition containing viridifloral or another fixative in an amount of about 1 to about 10 wt. % relative to other components in the cooling composition.
34. A chewing gum according to item 33 comprising a cooling composition containing viridifloral in an amount of about 3 to about 6 wt. % relative to other components in the cooling composition.
35. A chewing gum according to item 21 comprising a cooling composition containing isopulegol in an amount of about 1 to about 10 wt. % relative to other components in the cooling composition.
36. A chewing gum according to item 35 comprising a cooling composition containing isopulegol in an amount of about 3 to about 6 wt. % relative to other components in the cooling composition.
37. A chewing gum according to item 21 further comprising a cooling agent in addition to the cooling agents that provide a substantial menthol sensation.
38. A chewing gum according to item 37 wherein the additional cooling agent is selected from the group consisting of:
   (1) a compound represented by formula (I): 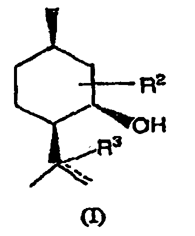 wherein R² and R³ each represent a hydrogen atom or a hydroxyl group, represents a single bond or a double bond, the same definition applies hereinafter,
   (2) a compound represented by formula (II): 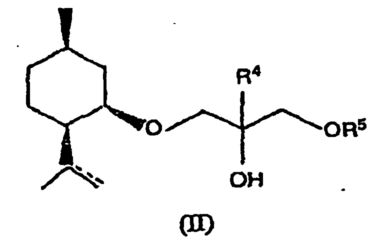 wherein R⁴ represents a hydrogen atom or a methyl group; R⁵ represents a hydrogen atom, a lower alkyl group or a 2-alkoxyethyl group,
   (3) a compound represented by formula (III): 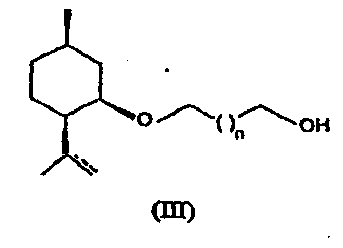 wherein n represents an integer of 1 to 10,
   (4) a compound represented by formula (IV): 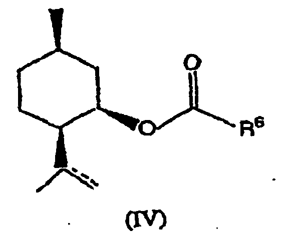 wherein R⁶ represents a hydrogen atom, a straight-chain or branched alkyl or alkenyl group, or a straight-chain or branched hydroxyalkyl group, and
   (5) a compound represented by formula (V): 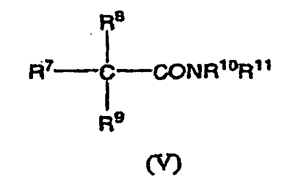 wherein R¹⁰ and R¹¹, when taken together, represent an alkylene group of up to 6 carbon atoms, the opposite ends of which group are attached to the amide nitrogen atom thereby to form a nitrogen heterocycle, the carbon atom chain of which may optionally be interrupted by oxygen;
      R⁷ is hydrogen or C1-C5 alkyl; and
      R⁸ and R⁹ are each C1-C5 alkyl;
      with the provisos that
      (i) R⁷, R⁸ and R⁹ together provide a total of at least 5 carbon atoms; and
      (ii) when R⁷ is hydrogen, R⁸ is C2 -C5 alkyl and R⁹ is C3 -C5 alkyl and at least one of R⁷ and R⁸ is branched.
39. A confection comprising a composition, said composition including at least one cooling agent and providing substantially the same physiological sensation as a composition comprising menthol.
40. A confection according to item 39 substantially free of menthol.
41. A confection according to item 39 with no menthol.
42. A confection according to item 39 comprising a compound capable of providing a "nasal action" characteristic of menthol, an "aroma" characteristic of menthol, a "cooling effect" characteristic of menthol, and a "minty taste" characteristic of menthol.
43. A confection according to item 42, wherein the "nasal action" is provided by one or more of menthone, isomenthone, camphor and eucalyptol.
44. A confection according to item 42, wherein the "aroma" is provided by one or more of eucalyptol, camphor, borneol, menchone, menthone and isomenthone.
45. A confection according to item 42, wherein the "cooling effect" is provided by one or more of isopulegol, monomenthyl succinate, and menthyl lactate.
46. A confection according to item 42, wherein the "minty taste" is provided by one or more of menthone, isomenthone, borneol, fenchone, eucalyptus, ducalyptol, ethyl benzoate, neomenthol, d-fenchone, furfurylidene butyrate, bucchu fractions, sage oil, corn mint oil, rosemary, monomenthyl succinate, amyl salicylate, eugenol, phellendrene, propyl furoate, ethyl-3-hydroxy butyrate, hexyl valerate, anisyl propionate, anysyl butyrate, dihydrocarveol, and clary sage.
47. A confection according to item 40 comprising a cooling composition containing menthone and isomenthone in about 5 to about 75 wt. % relative to other components in the cooling composition.
48. A confection according to item 40 comprising a cooling composition containing menthone and isomenthone in about 10 to about 50 wt. % relative to other components in the cooling composition.
49. A confection according to item 40 comprising a cooling composition containing menthone and isomenthone in about 15 to about 25 wt. % relative to other components in the cooling composition.
50. A confection according to item 40 comprising a cooling composition containing monomenthyl succinate and methyl lactate in an amount each of about 5 to about 75 wt. % relative to other components in the cooling composition.
51. A confection according to item 40 comprising a cooling composition containing monomenthyl succinate and methyl lactate in an amount of about 10 to about 50 wt. % relative to other components in the cooling composition.
52. A confection according to item 40 comprising a cooling composition containing monomenthyl succinate and methyl lactate in an amount of about 15 to about 30 wt. % relative to other components in the cooling composition.
53. A confection according to item 40 comprising a cooling composition containing viridifloral or another fixative in an amount of about 1 to about 10 wt. % relative to other components in the cooling composition.
54. A confection according to item 53 comprising a cooling composition containing viridifloral in an amount of 3 to about 6 wt. % relative to other components in the cooling composition.
55. A confection according to item 40 comprising a cooling composition containing isopulegol in an amount of about 1 to about 10 wt. % relative to other components in the cooling composition.
56. A confection according to item 55 comprising a cooling composition containing isopulegol in an amount of about 3 to about 6 wt. % relative to other components in the cooling composition.
57. A confection according to item 40 further comprising a cooling agent in addition to those that provide a substantial menthol sensation.
58. A confection according to item 57, wherein the additional cooling agent is selected from the group consisting of:
   (1) a compound represented by formula (I): 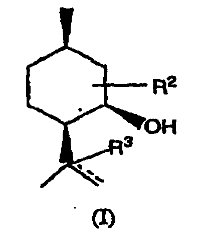 wherein R² and R³ each represent a hydrogen atom or a hydroxyl group, represents a single bond or a double bond, the same definition applies hereinafter,
   (2) a compound represented by formula II): 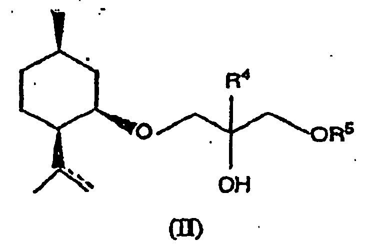 wherein R⁴ represents a hydrogen atom or a methyl group; R⁵ represents a hydrogen atom, a lower alkyl group or a 2-alkoxyethyl group,
   (3) a compound represented by formula (III): 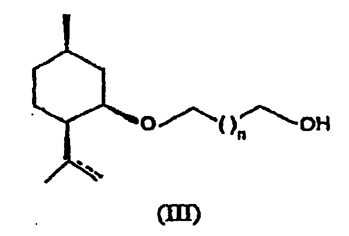 wherein n represents an integer of 1 to 10,
   (4) a compound represented by formula (IV): 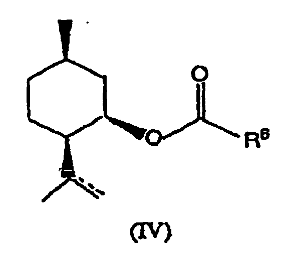 wherein R⁶ represents a hydrogen atom, a straight-chain or branched alkyl or alkenyl group, or a straight-chain or branched hydroxyalkyl group, and
   (5) a compound represented by formula (V): 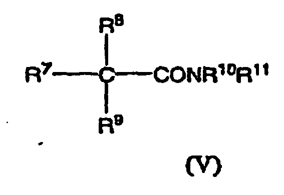 wherein R¹⁰ and R¹¹, when taken together, represent an alkylene group of up to 6 carbon atoms, the opposite ends of which group are attached to the amide nitrogen atom thereby to form a nitrogen heterocycle, the carbon atom chain of which may optionally be interrupted by oxygen;
      R⁷ is hydrogen or C1-C5 alkyl; and
      R⁸ and R⁹ are each C1-C5 alkyl;
      with the provisos that
      (i) R⁷, R⁸ and R⁹ together provide a total of at least 5 carbon atoms; and
      (ii) when ⁷ is hydrogen, R⁸ is C2 -C5 alkyl and R⁹ is C3 -C5 alkyl and at least one of R⁷ and R⁸ is branched.
59. A confection according to item 39, wherein the confection is selected from the group comprising hard boiled candy, soft candy, jelly candy, gummy candy, nougat, caramel, chocolate, and combinations thereof.
60. A method for delivering a physiological sensation substantially the same as that provided by menthol to the skin or a mucous membrane comprising administering to the skin or a mucous membrane a composition according to item 1.
61. The method of item 60, wherein the administered composition comprises at least one compound capable of providing a "nasal action" characteristic of menthol, an "aroma" characteristic of menthol, a "cooling effect" characteristic of menthol, and a "minty taste" characteristic of menthol.
62. The method of item 60, wherein the administered composition is contained in a chewing gum.
63. The method of item 60, wherein the administered composition is contained in a confection.
64. A composition providing substantially the same physiological sensation as a composition comprising menthol, said composition comprising: menthone in an amount of about 10 to about 25 wt%; isomenthone in an amount of about 10 to about 25 wt%; isopulegol in an amount of about 2.5 to about 15 wt%; monomenthyl succinate in an amount of about 15 to about 25 wt%; and menthyl lactate in an amount of about 5 to about 30 wt%.
65. The composition of item 64, further comprising eucalyptol in an amount of about 1.0 to 2.0 wt%.
66. The composition of item 64, further comprising camphor in an amount of about 1.0 to about 2.0 wt%.
67. The composition of item 64, further comprising viridiflorol in an amount of about 2.0 to about 10 wt%.
68. The composition of item 64, further comprising WS-14 in an amount of about 5 to about 25 wt%.
69. A chewing gum composition comprising the composition of item 64.
70. A confectionary composition comprising the composition of item 64.
71. A composition providing substantially the same physiological sensation as a composition comprising menthol, said composition comprises: menthone in an amount of about 10 to about 25 wt%; isomenthone in an amount of about 10 to about 25 wt%; isopulegol in an amount of about 2.5 to about 15 wt%; monomenthyl succinate in an amount of about 15 to about 25 wt%; menthyl lactate in an amount of about 5 to about 30 wt%; eucalyptol in an amount of about 1.0 to about 2.0 wt%; and camphor in an amount of about 1.0 to about 2.0 wt%.
72. The composition of item 71, further comprising viridifloral in an amount of about 2.0 to about 10 wt%.
73. A chewing gum composition comprising the composition of item 71.
74. A confectionary composition comprising the composition of item 71.

## Claims

1. A cooling composition comprising:
menthone in an amount of 10 to 25 weight percent;
isomenthone in an amount of 10 to 25 weight percent;
isopulegol in an amount of 2.5 to 15 weight percent;
monomenthyl succinate in an amount of 15 to 25 weight percent; and
menthyl lactate in an amount of 5 to 30 weight percent.

2. The cooling composition of claim 1, further comprising eucalyptol in an amount of 1.0 to 2.0 weight percent.

3. The cooling composition of claim 1 or 2, further comprising camphor in an amount of 1.0 to 2.0 weight percent.

4. The cooling composition of any one of claims 1-3, further comprising viridiflorol or another fixative in an amount of 1.0 to 10 weight percent.

5. The cooling composition according to any one of claims 1-3, comprising viridiflorol or another fixative in an amount of 3 to 6 weight percent.

6. The cooling composition of any one of claims 1-5, further comprising WS-14 in an amount of 5 to 25 weight percent.

7. The cooling composition of any one of claims 1-6, further comprising menthol.

8. The cooling composition of any one of claims 1-7, comprising the menthone and the isomenthone each in an amount of 15 to 25 weight percent.

9. The cooling composition of any one of claims 1-8, comprising the menthyl lactate in an amount of 15 to 30 weight percent.

10. The cooling composition according to any one of claims 1-9, comprising the isopulegol, in an amount of 3 to 6 weight percent

11. The cooling composition of claim 1,
comprising the menthone in an amount of 10 to 22 weight percent, the isomenthone in an amount of 10 to 22 weight percent, the isopulegol in an amount of 6 to 14 weight percent, the monomenthyl succinate in an amount of 18 to 22 weight percent, and the menthyl lactate in an amount of 9 to 25 weight percent; and
further comprising WS-14 in an amount of 9 to 19 weight percent, viridiflorol in an amount of 2 to 6 weight percent, and menthol in an amount of 4 to 5 weight percent.

12. A chewing gum comprising a cooling composition according to any one of claims 1-11.

13. A confection comprising a cooling composition according to any one of claims 1-11.

14. Use of a cooling composition according to any one of claims 1-11 for delivering a physiological sensation substantially the same as that provided by menthol to a skin or mucous membrane when administered to the skin or mucous membrane.

## Patentansprüche

1. Kühlende Zusammensetzung umfassend:
Menthon in einer Menge von 10 bis 25 Gewichtsprozent;
Isomenthon in einer Menge von 10 bis 25 Gewichtsprozent;
Isopulegol in einer Menge von 2,5 bis 15 Gewichtsprozent;
Monomenthylsuccinat in einer Menge von 15 bis 25 Gewichtsprozent; und
Menthyllactat in einer Menge von 5 bis 30 Gewichtsprozent.

2. Kühlende Zusammensetzung nach Anspruch 1, des Weiteren umfassend Eukalyptol in einer Menge von 1,0 bis 2,0 Gewichtsprozent.

3. Kühlende Zusammensetzung nach Anspruch 1 oder 2, des Weiteren umfassend Kampfer in einer Menge von 1,0 bis 2,0 Gewichtsprozent.

4. Kühlende Zusammensetzung nach einem der Ansprüche 1 bis 3, des Weiteren umfassend Viridiflorol oder ein anderes Fixiermittel in einer Menge von 1,0 bis 10 Gewichtsprozent.

5. Kühlende Zusammensetzung nach einem der Ansprüche 1 bis 3, umfassend Viridiflorol oder ein anderes Fixiermittel in einer Menge von 3 bis 6 Gewichtsprozent.

6. Kühlende Zusammensetzung nach einem der Ansprüche 1 bis 5, des Weiteren umfassend WS-14 in einer Menge von 5 bis 25 Gewichtsprozent.

7. Kühlende Zusammensetzung nach einem der Ansprüche 1 bis 6, des Weiteren umfassend Menthol.

8. Kühlende Zusammensetzung nach einem der Ansprüche 1 bis 7, umfassend das Menthon und das Isomenthon jeweils in einer Menge von 15 bis 25 Gewichtsprozent.

9. Kühlende Zusammensetzung nach einem der Ansprüche 1 bis 8, umfassend das Menthyllactat in einer Menge von 15 bis 30 Gewichtsprozent.

10. Kühlende Zusammensetzung nach einem der Ansprüche 1 bis 9, umfassend das Isopulegol in einer Menge von 3 bis 6 Gewichtsprozent.

11. Kühlende Zusammensetzung nach Anspruch 1,
umfassend das Menthon in einer Menge von 10 bis 22 Gewichtsprozent, das Isomenthon in einer Menge von 10 bis 22 Gewichtsprozent, das Isopulegol in einer Menge von 6 bis 14 Gewichtsprozent, das Monomenthylsuccinat in einer Menge von 18 bis 22 Gewichtsprozent, und das Menthyllactat in einer Menge von 9 bis 25 Gewichtsprozent; und
des Weiteren umfassend WS-14 in einer Menge von 9 bis 19 Gewichtsprozent, Viridiflorol in einer Menge von 2 bis 6 Gewichtsprozent, und Menthol in einer Menge von 4 bis 5 Gewichtsprozent.

12. Kaugummi umfassend eine kühlende Zusammensetzung nach einem der Ansprüche 1 bis 11.

13. Konfekt umfassend eine kühlende Zusammensetzung nach einem der Ansprüche 1 bis 11.

14. Verwendung einer kühlenden Zusammensetzung nach einem der Ansprüche 1 bis 11, zur Bereitstellung einer physiologischen Wahrnehmung, wenn sie auf die Haut oder die Schleimhaut aufgebracht wird, die im Wesentlichen dieselbe ist wie jene, die Menthol auf der Haut oder der Schleimhaut verursacht.

## Revendications

1. Composition rafraîchissante comprenant :
de la menthone en une quantité comprise entre 10 et 25 % en poids ;
de l'isomenthone en une quantité comprise entre 10 et 25 % en poids ;
de l'isopulégol en une quantité comprise entre 2,5 et 15 % en poids ;
du succinate de monomenthyle en une quantité comprise entre 15 et 25 % en poids ; et
du lactate de menthyle en une quantité comprise entre 5 et 30 % en poids.

2. Composition rafraichissante selon la revendication 1, comprenant en outre de l'eucalyptol en une quantité comprise entre 1,0 et 2,0 % en poids.

3. Composition rafraichissante selon la revendication 1 ou 2, comprenant en outre du camphre en une quantité comprise entre 1,0 et 2,0 % en poids.

4. Composition rafraichissante selon l'une quelconque des revendications 1 à 3, comprenant en outre du viridiflorol ou un autre fixatif en une quantité comprise entre 1,0 et 10 % en poids.

5. Composition rafraichissante selon l'une quelconque des revendications 1 à 3, comprenant en outre du viridiflorol ou un autre fixatif en une quantité comprise entre 3 et 6 % en poids.

6. Composition rafraichissante selon l'une quelconque des revendications 1 à 5, comprenant en outre du WS-14 en une quantité comprise entre 5 et 25 % en poids.

7. Composition rafraichissante selon l'une quelconque des revendications 1 à 6, comprenant en outre du menthol.

8. Composition rafraichissante selon l'une quelconque des revendications 1 à 7, comprenant la menthone et l'isomenthone chacune en une quantité comprise entre 15 et 25 % en poids.

9. Composition rafraichissante selon l'une quelconque des revendications 1 à 8, comprenant le lactate de menthyle en une quantité comprise entre 15 et 30 % en poids.

10. Composition rafraichissante selon l'une quelconque des revendications 1 à 9, comprenant l'isopulégol en une quantité comprise entre 3 et 6 % en poids.

11. Composition rafraichissante selon la revendication 1,
comprenant la menthone en une quantité comprise entre 10 et 22 % en poids, l'isomenthone en une quantité comprise entre 10 et 22 % en poids, l'isopulégol en une quantité comprise entre 6 et 14 % en poids, le succinate de monomenthyle en une quantité comprise entre 18 et 22 % en poids, et le lactate de menthyle en une quantité comprise entre 9 et 25 % en poids ; et
comprenant en outre du WS-14 en une quantité comprise entre 9 et 19 % en poids, du viridiflorol en une quantité comprise entre 2 et 6 % en poids, et du menthol en une quantité comprise entre 4 et 5 % en poids.

12. Gomme à mâcher comprenant une composition rafraichissante selon l'une quelconque des revendications 1 à 11.

13. Confiserie comprenant une composition rafraichissante selon l'une quelconque des revendications 1 à 11.

14. Utilisation d'une composition rafraichissante selon l'une quelconque des revendications 1 à 11 pour délivrer une sensation physiologique essentiellement identique à celle délivrée par le menthol sur la peau ou une membrane muqueuse lorsqu'elle est administrée sur la peau ou sur la membrane muqueuse.
